# EUROPEAN PATENT APPLICATION

(11) **EP 4 787 976 A1**
(43) Date of publication of application: **05.08.2026**
(21) Application number: 24876406.0
(22) Date of filing: 26.09.2024
(51) Int. Cl.: H04W 52/02

(54) **COMMUNICATION METHOD AND APPARATUS**

(30) Priority: 09.10.2023 CN 202311302628
(71) Applicant: HUAWEI TECHNOLOGIES CO., LTD., Shenzhen 518129 (CN)
(72) Inventor: GAO, Hongbo, Shenzhen, Guangdong 518129 (CN)
(74) Representative: Epping - Hermann - Fischer
(86) International application number: PCT/CN2024/121412
(87) International publication number: WO 2025/077588

(57) **Abstract**

This application relates to the communication field, and discloses a communication method and apparatus. The method includes: A first network device schedules a slot resource in a first slot, where the slot resource in the first slot is used to transmit a signal between a network device and a terminal device; and the first network device sends a first message to a second network device, where the first message includes beam identification information, and the beam identification information indicates whether to perform beam weighting processing on the transmitted signal in the first slot. Based on the indication of the beam identification information, the second network device performs beam weighting processing on the transmitted signal in the first slot, or does not perform beam weighting processing on the transmitted signal in the first slot. This application can reduce energy consumption of the network device.

## Description

This application claims priority to Chinese Patent Application No. 202311302628.2, filed on October 9, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

With development of mobile communication networks, energy consumption of wireless communication network devices is increasingly high. Among energy consumption compositions of the wireless network devices, base station devices account for a relatively large proportion of power consumption. To reduce energy consumption of the base station devices, a symbol power saving solution is provided in related technologies. The solution, which is a dynamic power control technology, allows an uplink low noise power amplifier (low noise amplifier, LNA) to be disabled when no data is received within symbol periods of uplink signals, or allows a downlink power amplifier (power amplifier, PA) of a radio frequency module to be disabled when no data is sent within symbol periods of downlink signals, to reduce the energy consumption of the base station devices.

However, in view of the high energy consumption of the base station devices, there is still a need to figure out more ways of reducing their energy consumption.

### SUMMARY

This application provides a communication method and apparatus, to reduce energy consumption of a network device (for example, a base station).

According to a first aspect, this application provides a communication method, and the method is applied to a first network device. The method includes: scheduling a slot resource in a first slot, where the slot resource in the first slot is used to transmit a signal between a network device and a terminal device; and sending a first message, where the first message includes beam identification information, and the beam identification information indicates whether to perform beam weighting processing on the transmitted signal in the first slot.

In the method, the first network device may send the first message to a second network device. The beam identification information in the first message indicates not to perform beam weighting processing on the transmitted signal in the first slot. The second network device may not perform beam weighting processing on the transmitted signal in the first slot based on the indication of the beam identification information. This can effectively reduce energy consumption occupied by performing a beam weighting processing function, thereby reducing energy consumption of the second network device or an entire base station system.

In a possible design, the method further includes: obtaining scheduling information, where the scheduling information indicates whether scheduling is performed in the first slot. When the scheduling information indicates that no scheduling is performed in the first slot, the beam identification information indicates not to perform beam weighting processing on the transmitted signal in the first slot.

In this design, the first network device may determine, based on the scheduling information, whether scheduling is performed in the first slot, and determine, based on whether scheduling is performed in the first slot, that the beam identification information indicates whether to perform beam weighting processing on the transmitted signal in the first slot. When the scheduling information indicates that no scheduling is performed in the first slot, the beam identification information indicates not to perform beam weighting processing on the transmitted signal in the first slot. When the scheduling information indicates that scheduling is performed in the first slot, the beam identification information indicates to perform beam weighting processing on the transmitted signal in the first slot. In this design, in a scenario in which no scheduling is performed in an uplink slot or a downlink slot, that is, no service data needs to be transmitted, the beam identification information may indicate, to the second network device, not to perform beam weighting processing on the transmitted signal in the first slot, so that energy consumption is reduced by not performing beam weighting processing in a scenario in which no service data needs to be transmitted, thereby reducing energy consumption for the network device without affecting service data transmission quality.

In a possible design, the first message further includes scheduling type information; and the scheduling type information indicates whether scheduling is performed in the first slot. When the scheduling information indicates that no scheduling is performed in the first slot, the scheduling type information indicates that no scheduling is performed in the first slot; and when the scheduling type information indicates that no scheduling is performed in the first slot, the beam identification information indicates not to perform beam weighting processing on the transmitted signal in the first slot.

In this design, the first message further includes the scheduling type information. When the scheduling type information indicates that scheduling is performed in the first slot, the beam identification information indicates to perform beam weighting processing on the transmitted signal in the first slot. When the scheduling type information indicates that no scheduling is performed in the first slot, the beam identification information indicates not to perform beam weighting processing on the transmitted signal in the first slot.

In this design, in a scenario in which no scheduling is performed in an uplink slot or a downlink slot, that is, no service data needs to be transmitted, the scheduling type information may indicate, to the second network device, that no scheduling is performed in the uplink slot or the downlink slot, and the beam identification information may indicate, to the second network device, not to perform beam weighting processing on the transmitted signal in the first slot. In a scenario in which scheduling is performed in an uplink slot or a downlink slot, that is, service data needs to be transmitted, the scheduling type information may indicate, to the second network device, that scheduling is performed in the uplink slot or the downlink slot, and the beam identification information may indicate, to the second network device, to perform beam weighting processing on the transmitted signal in the first slot. In this way, energy consumption is reduced by not performing beam weighting processing in the scenario in which no service data needs to be transmitted. In this design, when determining that the beam identification information indicates whether to perform beam weighting processing on the transmitted signal in the first slot, the first network device only needs to make a decision based on the indication of the scheduling type information, and does not need to pay attention to specific scheduling content of the first slot.

In a possible design, the first message includes a control plane message, the control plane message includes resource information, the resource information indicates the slot resource in the first slot, and the control plane message indicates that scheduling of the slot resource in the first slot is completed.

In this design, the first message may be a control plane message sent through a network communication interface between the first network device and the second network device, for example, may be a scheduling and beamforming commands message. The scheduling and beamforming commands message is used as an example. The scheduling and beamforming commands message includes indication information indicating whether the second network device performs beam weighting processing. In a specific implementation, the indication information is a "section type" field and a "beamID" field. When a value of the "section type" field is not 0, it indicates that scheduling is performed in the first slot; and when a value of the "beamID" field is not 0, it indicates that beam weighting processing is performed on the transmitted signal in the first slot.

In this design, the existing control plane message may be used, and beam identification information is added to the control plane information, to implement a function of indicating, to the second network device, whether to perform beam weighting processing on the transmitted signal in the first slot. Therefore, implementation costs are low, for example, protocol modification costs are low.

In a possible design, the first message further includes at least one of the following identification information: compression identification information, filtering identification information, and symbol power saving identification information. The compression identification information indicates whether to perform in-phase and quadrature-phase signal decompression or compression on the transmitted signal in the first slot; the filtering identification information indicates whether to perform filtering on the transmitted signal in the first slot; and the symbol power saving identification information indicates whether to perform symbol power saving on the transmitted signal in the first slot.

In this design, when the second network device does not perform in-phase and quadrature-phase signal decompression or compression on the transmitted signal in the first slot based on the indication of the compression identification information, or does not perform filtering on the transmitted signal in the first slot based on the indication of the filtering identification information, or performs symbol power saving on the transmitted signal in the first slot based on the indication of the symbol power saving identification information, energy consumption of the second network device can be further reduced. The first message indicates whether the second network device performs symbol power saving on the transmitted signal in the first slot, and the second network device does not need to determine, in a symbol energy detection manner, whether to perform symbol power saving on the transmitted signal in the first slot.

In a possible design, when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

In this design, the first network device determines, based on the scheduling result in the first slot, that the compression identification information indicates whether to perform in-phase and quadrature-phase signal decompression or compression on the transmitted signal in the first slot, that the filtering identification information indicates whether to perform filtering on the transmitted signal in the first slot, and that the symbol power saving identification information indicates whether to perform symbol power saving on the transmitted signal in the first slot. In a scenario in which no scheduling is performed in an uplink slot or a downlink slot, that is, no service data needs to be transmitted, this can indicate the second network device to perform symbol power saving on the transmitted signal in the first slot, and not to perform the following processing on the transmitted signal in the first slot: beam weighting processing, in-phase and quadrature-phase signal decompression or compression, or filtering, to further reduce energy consumption in the scenario in which no service data needs to be transmitted.

In a possible design, the first slot includes an uplink slot and/or a downlink slot.

In this design, the first slot may be the uplink slot, or may be the downlink slot.

According to a second aspect, this application provides a communication apparatus. The apparatus has a function of implementing the method according to the first aspect. The function may be implemented by hardware, or may be implemented by executing corresponding software by hardware. The hardware or the software includes one or more units or modules corresponding to the function of the method according to the first aspect, for example, a processing unit and a sending unit.

The processing unit is configured to schedule a slot resource in a first slot, where the slot resource in the first slot is used to transmit a signal between a network device and a terminal device. The sending unit is configured to send a first message, where the first message includes beam identification information, and the beam identification information indicates whether to perform beam weighting processing on the transmitted signal in the first slot.

In a possible design, the processing unit is further configured to obtain scheduling information, where the scheduling information indicates whether scheduling is performed in the first slot. When the scheduling information indicates that no scheduling is performed in the first slot, the beam identification information indicates not to perform beam weighting processing on the transmitted signal in the first slot.

In a possible design, the first message further includes scheduling type information; and the scheduling type information indicates whether scheduling is performed in the first slot. When the scheduling information indicates that no scheduling is performed in the first slot, the scheduling type information indicates that no scheduling is performed in the first slot; and when the scheduling type information indicates that no scheduling is performed in the first slot, the beam identification information indicates not to perform beam weighting processing on the transmitted signal in the first slot.

In a possible design, the first message includes a control plane message, the control plane message includes resource information, the resource information indicates the slot resource in the first slot, and the control plane message indicates that scheduling of the slot resource in the first slot is completed.

In a possible design, the first message further includes at least one of the following identification information: compression identification information, filtering identification information, and symbol power saving identification information. The compression identification information indicates whether to perform in-phase and quadrature-phase signal decompression or compression on the transmitted signal in the first slot; the filtering identification information indicates whether to perform filtering on the transmitted signal in the first slot; and the symbol power saving identification information indicates whether to perform symbol power saving on the transmitted signal in the first slot.

In a possible design, when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

In a possible design, the first slot includes an uplink slot and/or a downlink slot.

According to a third aspect, an embodiment of this application further provides a communication apparatus, including a processor, configured to execute computer instructions stored in a memory. When the computer instructions are executed, the apparatus is enabled to perform the method according to any one of the first aspect or the possible designs of the first aspect.

According to a fourth aspect, this application further provides a communication apparatus, including a processor and an interface circuit. The processor is configured to: communicate with another apparatus via the interface circuit, and perform the method according to any one of the first aspect or the possible designs of the first aspect.

The communication apparatus according to the second aspect to the fourth aspect may be applied to a network device, for example, a first network device.

According to a fifth aspect, this application further provides a computer-readable storage medium, including computer software instructions. When the computer software instructions are run on a network device or is built in a chip of a network device, the network device is enabled to perform the method according to any one of the first aspect or the possible designs of the first aspect.

It may be understood that, for beneficial effect that can be achieved in the second aspect to the fifth aspect, refer to the beneficial effect in any one of the first aspect or the possible designs of the first aspect. Details are not described herein again.

According to a sixth aspect, this application provides a communication method, and the method is applied to a second network device. The method includes: receiving a first message, where the first message includes beam identification information, and the beam identification information indicates whether to perform beam weighting processing on a transmitted signal in a first slot; and when the beam identification information indicates no, skipping performing beam weighting processing on the transmitted signal in the first slot.

In the method, the second network device may receive the first message. The beam identification information in the first message indicates not to perform beam weighting processing on the transmitted signal in the first slot. The second network device may not perform beam weighting processing on the transmitted signal in the first slot based on the indication of the beam identification information. This can effectively reduce energy consumption occupied by performing a beam weighting processing function, thereby reducing energy consumption of the second network device or an entire base station system.

In a possible design, the first message further includes scheduling type information; and the scheduling type information indicates whether scheduling is performed in the first slot. When the scheduling type information indicates that no scheduling is performed in the first slot, the beam identification information indicates not to perform beam weighting processing on the transmitted signal in the first slot.

In this design, the first message further includes the scheduling type information. When the scheduling type information indicates that scheduling is performed in the first slot, the beam identification information indicates to perform beam weighting processing on the transmitted signal in the first slot. When the scheduling type information indicates that no scheduling is performed in the first slot, the beam identification information indicates not to perform beam weighting processing on the transmitted signal in the first slot.

In this design, in a scenario in which no scheduling is performed in an uplink slot or a downlink slot, that is, no service data needs to be transmitted, the scheduling type information may indicate, to the second network device, that no scheduling is performed in the uplink slot or the downlink slot, and the beam identification information may indicate, to the second network device, not to perform beam weighting processing on the transmitted signal in the first slot. In a scenario in which scheduling is performed in an uplink slot or a downlink slot, that is, service data needs to be transmitted, the scheduling type information may indicate, to the second network device, that scheduling is performed in the uplink slot or the downlink slot, and the beam identification information may indicate, to the second network device, to perform beam weighting processing on the transmitted signal in the first slot. In this way, energy consumption is reduced by not performing beam weighting processing in the scenario in which no service data needs to be transmitted.

In a possible design, the first message includes a control plane message, the control plane message includes resource information, the resource information indicates a slot resource in the first slot, and the control plane message indicates that scheduling of the slot resource in the first slot is completed.

In this design, the first message may be a control plane message sent through a network communication interface between the first network device and the second network device, for example, may be a scheduling and beamforming commands message. The scheduling and beamforming commands message is used as an example. The scheduling and beamforming commands message includes indication information indicating whether the second network device performs beam weighting processing. In a specific implementation, the indication information is a "section type" field and a "beamID" field. When a value of the "section type" field is not 0, it indicates that scheduling is performed in the first slot; and when a value of the "beamID" field is not 0, it indicates that beam weighting processing is performed on the transmitted signal in the first slot.

In this design, the existing control plane message may be used, and beam identification information is added to the control plane information, to implement a function of indicating, to the second network device, whether to perform beam weighting processing on the transmitted signal in the first slot. Therefore, implementation costs are low, for example, protocol modification costs are low.

In a possible design, the first message further includes at least one of the following identification information: compression identification information, filtering identification information, and symbol power saving identification information. The compression identification information indicates whether to perform in-phase and quadrature-phase signal decompression or compression on the transmitted signal in the first slot; the filtering identification information indicates whether to perform filtering on the transmitted signal in the first slot; and the symbol power saving identification information indicates whether to perform symbol power saving on the transmitted signal in the first slot.

The method further includes: for at least one target identification information in the compression identification information, the filtering identification information, and the symbol power saving identification information, processing the transmitted signal in the first slot based on an indication of the target identification information.

In this design, when the second network device does not perform in-phase and quadrature-phase signal decompression or compression on the transmitted signal in the first slot based on the indication of the compression identification information, or does not perform filtering on the transmitted signal in the first slot based on the indication of the filtering identification information, or performs symbol power saving on the transmitted signal in the first slot based on the indication of the symbol power saving identification information, energy consumption of the second network device can be further reduced. The first message indicates whether the second network device performs symbol power saving on the transmitted signal in the first slot, and the second network device does not need to determine, in a symbol energy detection manner, whether to perform symbol power saving on the transmitted signal in the first slot.

In a possible design, when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

In this design, in a scenario in which no scheduling is performed in an uplink slot or a downlink slot, that is, no service data needs to be transmitted, this can indicate the second network device to perform symbol power saving on the transmitted signal in the first slot, and not to perform the following processing on the transmitted signal in the first slot: beam weighting processing, in-phase and quadrature-phase signal decompression or compression, or filtering, to further reduce energy consumption in the scenario in which no service data needs to be transmitted.

In a possible design, the first slot includes an uplink slot and/or a downlink slot.

In this design, the first slot may be the uplink slot, or may be the downlink slot.

According to a seventh aspect, this application provides a communication apparatus. The apparatus has a function of implementing the method according to the sixth aspect. The function may be implemented by hardware, or may be implemented by executing corresponding software by hardware. The hardware or the software includes one or more units or modules corresponding to the function of the method according to the sixth aspect, for example, a receiving unit and a processing unit.

The receiving unit is configured to receive a first message, where the first message includes beam identification information, and the beam identification information indicates whether to perform beam weighting processing on a transmitted signal in a first slot. The processing unit is configured to: when the beam identification information indicates no, skip performing beam weighting processing on the transmitted signal in the first slot.

In a possible design, the first message further includes scheduling type information; and the scheduling type information indicates whether scheduling is performed in the first slot. When the scheduling type information indicates that no scheduling is performed in the first slot, the beam identification information indicates not to perform beam weighting processing on the transmitted signal in the first slot.

In a possible design, the first message includes a control plane message, the control plane message includes resource information, the resource information indicates a slot resource in the first slot, and the control plane message indicates that scheduling of the slot resource in the first slot is completed.

In a possible design, the first message further includes at least one of the following identification information: compression identification information, filtering identification information, and symbol power saving identification information. The compression identification information indicates whether to perform in-phase and quadrature-phase signal decompression or compression on the transmitted signal in the first slot; the filtering identification information indicates whether to perform filtering on the transmitted signal in the first slot; and the symbol power saving identification information indicates whether to perform symbol power saving on the transmitted signal in the first slot.

The processing unit is further configured to: for at least one target identification information in the compression identification information, the filtering identification information, and the symbol power saving identification information, process the transmitted signal in the first slot based on an indication of the target identification information.

In a possible design, when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

In a possible design, the first slot includes an uplink slot and/or a downlink slot.

According to an eighth aspect, an embodiment of this application further provides a communication apparatus, including a processor, configured to execute computer instructions stored in a memory. When the computer instructions are executed, the apparatus is enabled to perform the method according to any one of the sixth aspect or the possible designs of the sixth aspect.

According to a ninth aspect, this application further provides a communication apparatus, including a processor and an interface circuit. The processor is configured to: communicate with another apparatus via the interface circuit, and perform the method according to any one of the sixth aspect or the possible designs of the sixth aspect.

The communication apparatus according to the seventh aspect to the ninth aspect may be applied to a network device, for example, a second network device.

According to a tenth aspect, this application further provides a computer-readable storage medium, including computer software instructions. When the computer software instructions are run on a network device or is built in a chip of a network device, the network device is enabled to perform the method according to any one of the sixth aspect or the possible designs of the sixth aspect.

It may be understood that, for beneficial effect that can be achieved in the seventh aspect to the tenth aspect, refer to the beneficial effect in any one of the sixth aspect or the possible designs of the sixth aspect. Details are not described herein again.

According to an eleventh aspect, this application further provides a communication apparatus, including a transceiver unit and a processing unit. The transceiver unit may be configured to send and receive information, or configured to communicate with another network element. The processing unit may be configured to process data. For example, the apparatus may implement, via the transceiver unit and the processing unit, the method according to any one of the first aspect and the possible designs of the first aspect, or the method according to any one of the sixth aspect and the possible designs of the sixth aspect.

According to a twelfth aspect, this application further provides a computer program product. When the computer program product is executed, the method according to any one of the first aspect and the possible designs of the first aspect, or the method according to any one of the sixth aspect and the possible designs of the sixth aspect can be implemented.

According to a thirteenth aspect, this application further provides a chip system. The chip system is applied to a network device. The chip system includes one or more interface circuits and one or more processors. The interface circuit and the processor are interconnected through a line. The processor receives and executes computer instructions from a memory of an electronic device via the interface circuit, to implement the method according to any one of the first aspect and the possible designs of the first aspect, or the method according to any one of the sixth aspect and the possible designs of the sixth aspect. The network device may be a first network device or a second network device.

According to a fourteenth aspect, this application further provides a communication system, including a first network device and a second network device. The first network device performs the method according to any one of the first aspect or the possible designs of the first aspect, and the second network device performs the method according to any one of the sixth aspect or the possible designs of the sixth aspect.

It may be understood that for beneficial effect that can be achieved in the eleventh aspect to the fourteenth aspect, refer to the beneficial effect in the first aspect, the sixth aspect, and the like. Details are not described herein again.

### BRIEF DESCRIPTION OF DRAWINGS

FIG. 1 is a diagram of a principle of symbol power saving;
FIG. 2 is a diagram of a composition of a base station system according to an embodiment of this application;
FIG. 3 is a diagram of a composition of a network device according to an embodiment of this application;
FIG. 4 is a schematic flowchart of a communication method according to an embodiment of this application;
FIG. 5 is a diagram of function division between an O-DU and an O-RU according to an embodiment of this application;
FIG. 6 is another schematic flowchart of a communication method according to an embodiment of this application;
FIG. 7 is still another schematic flowchart of a communication method according to an embodiment of this application;
FIG. 8 is still another schematic flowchart of a communication method according to an embodiment of this application;
FIG. 9 is still another schematic flowchart of a communication method according to an embodiment of this application;
FIG. 10 is still another schematic flowchart of a communication method according to an embodiment of this application;
FIG. 11 is still another schematic flowchart of a communication method according to an embodiment of this application;
FIG. 12 is still another schematic flowchart of a communication method according to an embodiment of this application;
FIG. 13 is still another schematic flowchart of a communication method according to an embodiment of this application;
FIG. 14 is a diagram of a structure of a communication apparatus according to an embodiment of this application;
FIG. 15 is another diagram of a structure of a communication apparatus according to an embodiment of this application; and
FIG. 16 is still another diagram of a structure of a communication apparatus according to an embodiment of this application.

### DESCRIPTION OF EMBODIMENTS

With development of a mobile communication network, energy consumption of a wireless communication network device is increasingly high. In energy consumption compositions of the wireless network device, energy consumption of a base station device accounts for a high proportion. To reduce energy consumption of the base station device, a symbol power saving solution is provided in a related technology. The solution is a dynamic power control technology. An uplink low noise power amplifier (low noise amplifier, LNA) may be disabled when no data is received within a symbol period of an uplink signal, or a downlink power amplifier (power amplifier, PA) of a radio frequency module may be disabled when no data is sent within a symbol period of a downlink signal, to reduce the energy consumption of the base station device.

For example, when a service load of a base station is idle or light, a part of uplink slots or downlink slots has an idle channel (a period in which a symbol is located is idle), and no uplink data is received or no downlink data is sent. Symbol power saving may take effect on the base station to disable an LNA or a PA on the idle channel (or in the idle symbol period), to reduce energy consumption of the base station device.

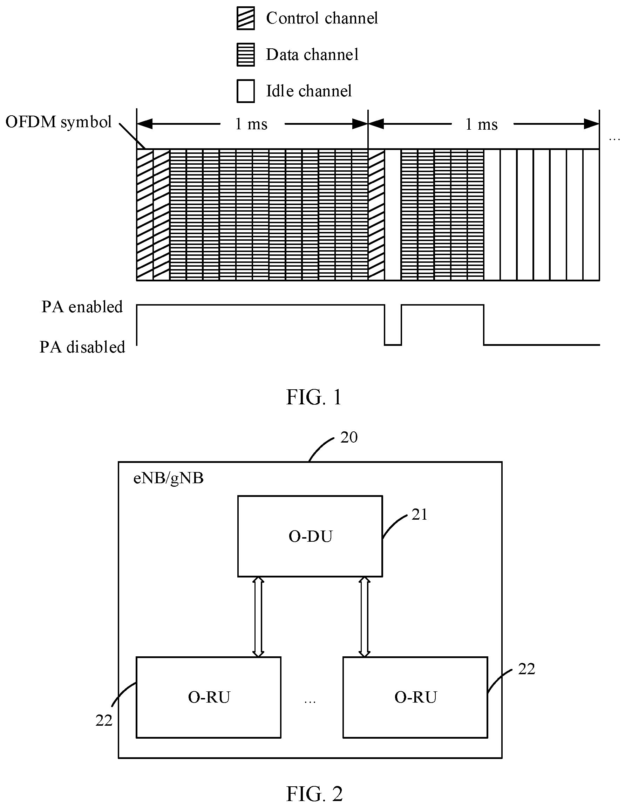

For example, FIG. 1 is a diagram of a principle of symbol power saving. As shown in FIG. 1, in a 5G NR system, for example, a base station disables a PA on an idle channel of a downlink slot, and one slot (slot) is 1 millisecond (ms). For a normal cyclic prefix (normal cyclic prefix), one slot may include 14 orthogonal frequency division multiplexing (orthogonal frequency division multiplexing, OFDM) symbols. Each slot may include a control channel, a data channel, and/or an idle channel. An OFDM symbol of the control channel may be referred to as a control signal, and an OFDM signal of the data channel may be referred to as a data signal. An OFDM symbol in which the idle channel is located may be referred to as an idle signal. The control channel is used to transmit control information, scheduled resource, and management system signals. The data channel is used to carry data.

The base station may detect whether data is carried in each channel period in the downlink slot. For a symbol period in which the idle channel is located, the PA can be disabled on the channel or in the symbol period to reduce energy consumption. For example, a baseband subsystem of the base station may perform baseband processing, such as scrambling, modulation, layer mapping, precoding, resource element (resource element, RE) mapping, inverse fast fourier transform (inverse fast fourier transform, iFFT), and cyclic prefix (cyclic prefix, CP) addition (addition), on subframe data obtained through scheduling by a media access control (medium access control, MAC) layer, convert a data flow from frequency domain to time domain, and send the data flow to an intermediate radio frequency subsystem. An intermediate frequency chip of the intermediate radio frequency subsystem may perform power energy detection on each symbol in the time domain data flow. If a detection result of the power energy detection is empty, the PA is disabled. The detection result of the symbol power energy detection being empty may refer to detecting a preceding portion of samples in a CP indication of the symbol is 0. In other words, when the symbol power energy detection is empty, it may indicate that the symbol is an idle signal carrying no data (that is, a channel is idle), and the PA may be disabled on the idle channel or in a symbol period of the idle signal. For distribution of OFDM symbols in some slots shown in FIG. 1, for an enabled or disabled state of the PA, refer to a line indicating that the PA is enabled or disabled in FIG. 1. A line at the top indicates that the PA is enabled, and a line at the bottom indicates that the PA is disabled. For example, in FIG. 1, in a 2^{nd} slot, the PA may be disabled for a 2^{nd} control channel, and the PA may be disabled for 6^{th} to 12^{th} idle channels.

However, in view of high energy consumption of the base station device, more manners of reducing the energy consumption of the base station device still need to be continuously explored. Therefore, an embodiment of this application provides a communication method, and the method may be applied to a network device in a communication system. The communication system may include a network device and a terminal device. The terminal device may communicate with the network device, for example, transmit a signal. The network device may include a first network device and a second network device. The first network device may be configured to schedule a slot resource. The second network device may transmit a signal with the terminal device based on the slot resource scheduled by the first network device. For example, the signal may carry service data.

In the method, the first network device may schedule a slot resource in a first slot, and the slot resource in the first slot is used to transmit a signal between the network device and the terminal device. The first network device may send a first message to the second network device, where the first message includes beam identification information, and the beam identification information indicates whether to perform beam weighting processing on the transmitted signal in the first slot. After the second network device receives the first message, when the beam identification information indicates to perform beam weighting processing on the transmitted signal in the first slot, when transmitting the signal with the terminal device, the second network device may perform beam weighting processing on the transmitted signal in the first slot. Alternatively, when the beam identification information indicates not to perform beam weighting processing on the transmitted signal in the first slot, when transmitting the signal with the terminal device, the second network device may not perform beam weighting processing on the transmitted signal in the first slot.

The first slot may be any one or more slots or each slot.

According to the method, the first network device may indicate, to the second network device, whether the second network device needs to perform beam weighting processing on the transmitted signal in the first slot when transmitting the signal with the terminal device. When the second network device does not perform beam weighting processing on the transmitted signal in the first slot based on the indication of the first network device, energy consumption of the network device (for example, the second network device) can be effectively reduced.

In some embodiments, the communication system may include at least one terminal device and at least one network device.

The network device may also be referred to as a radio access network device or a next-generation radio access network device. The terminal device may communicate with the network device. The network device may provide function services, for example, radio resource management, quality of service management, and data encryption and compression, for the terminal device. Different network devices may communicate with each other through an Xn interface. Different terminal devices may exchange information and communicate with each other via the network device. The terminal device is located in coverage of one or more cells (carriers) provided by the network device. In other words, there may be one or more cells serving the terminal device. When there are a plurality of serving cells of the terminal device, the terminal device may operate in a CA transmission mode, a dual connectivity (dual connectivity, DC) transmission mode, or a coordinated multipoint transmission mode.

Optionally, the communication system may be a wideband code division multiple access (wideband code division multiple access, WCDMA) system, a long term evolution (long term evolution, LTE) system, a long term evolution-advanced LTE-A (LTE advanced) system, an LTE frequency division duplex (frequency division duplex, FDD) system, a universal mobile telecommunications system (universal mobile telecommunications system, UMTS), a 5G NR system, another wireless communication system to which an OFDM technology is applied, or the like. A specific type of the communication system is not limited in this application.

For example, when the communication system is a 5G NR system, the communication system may further include a core network device, and the core network device and the network device may communicate with each other through a next generation (next generation, NG) interface. Optionally, the terminal device in the communication system may also be referred to as user equipment (user equipment, UE), a mobile station (mobile station, MS), a mobile terminal (mobile terminal, MT), or the like. The terminal device may be a device that provides voice and/or data connectivity for a user, for example, a mobile phone (a "cellular" phone), a cell phone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld computing device, a satellite wireless device, a wireless modem card, a television set-top box (set-top box, STB), a customer premises equipment (customer premises equipment, CPE), a wearable device (for example, a smartwatch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), another device used for communication in a wireless system, for example, another MTC terminal in IoT. A specific representation form of the terminal device is not limited in this application either.

The network device may be an access network device of the communication system, for example, a base station. Optionally, in this embodiment of this application, the network device may include a macro base station, a micro base station (also referred to as a small cell), or the like in various forms. For example, the network device may include a base station in WCDMA or LTE, a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), a Wireless Fidelity (Wireless Fidelity, Wi-Fi) access point (access point, AP), or the like.

It may be understood that the communication system is merely intended to describe the technical solutions in embodiments of this application more clearly, and does not constitute a limitation on the technical solutions provided in embodiments of this application. For example, the communication system may further include another device, for example, a network control device. The network control device may be an operation, administration, and maintenance (operation administration and maintenance, OAM) system, which is also referred to as a network management system. The network control device may manage the foregoing network device. Corresponding to the communication system, the network device in embodiments of this application may be a base station system based on a fourth generation mobile information technology (the 4th generation mobile communication technology, 4G), or may be a base station system based on a fifth generation mobile information technology (the 5th generation mobile communication technology, 5G), or may be a base station system based on a sixth generation mobile information technology (the 6th generation mobile communication technology, 6G), or may even be applied to a base station system or a fronthaul network in a future communication network. This is not specifically limited.

In some embodiments, the first network device may be a control network element, the second network device may be an execution network element, the control network element may be configured to schedule a slot resource, and the execution network element may transmit a signal with the terminal device based on the slot resource scheduled by the control network element. The control network element may send a first message to the execution network element, where the first message includes beam identification information, and the beam identification information indicates whether to perform beam weighting processing on the transmitted signal in the first slot. Based on the indication of the beam identification information, the execution network element may not perform beam weighting processing on the transmitted signal in the first slot, or may perform beam weighting processing on the transmitted signal in the first slot.

For example, the control network element and the execution network element are communicatively connected through a communication interface. The control network element may be a network element for controlling service processing, and can collect information related to the execution network element from the execution network element through the communication interface, and send control information to the execution network element, to control the execution network element. The execution network element is a network element that performs corresponding service processing based on the control information sent by the control network element.

In addition, the communication interface between the control network element and the execution network element may be a transmission protocol interface based on a transmission interface, for example, a backplane bus, an optical fiber, a radio frequency cable, a copper axis cable, or a high-speed serial cable. For example, when the communication interface uses a transmission medium, for example, a backplane bus or an optical fiber, the communication interface may be an interface based on a common public radio interface (common public radio interface, CPRI) protocol, or may be an interface based on an enhanced public radio interface (enhanced public radio interface, eCPRI) protocol, or may be an interface based on a similar CPRI (Similar CPRI, sCPRI) protocol, or may be another fronthaul network interface. For example, when the communication interface uses a transmission medium, for example, a radio frequency cable, a copper axis cable, or a high-speed serial cable, the communication interface may be an interface based on an antenna interface standards group (antenna interface standards group, AISG) protocol or an interface based on an Ethernet protocol. This is not specifically limited either.

Optionally, an intermediate network element may be further included between the control network element and the execution network element. The intermediate network element is configured to connect the control network element and the execution network element, and forward signaling between the control network element and the execution network element. Optionally, the intermediate network element may further implement an interface conversion function. When the execution network element and the control network element separately support different communication interfaces, the intermediate network element can implement interface protocol conversion, so that the control network element and the execution network element that use different interface protocols can communicate with each other. For example, when the control network element supports a function above an interface based on an eCPRI protocol (for example, a function above a high physical layer (PHY-High)), and the execution network element supports a function below an interface based on a CPRI protocol (for example, a function below a radio frequency function), the intermediate network element that connects the control network element and the execution network element may have various functions (for example, functions such as precoding, resource element/particle (resource element, RE) mapping, and RE inverse mapping) of a low physical layer (PHY-Low), so that the control network element supporting the eCPRI protocol and the execution network element supporting the CPRI protocol can communicate with each other.

Optionally, the control network element may include a non-real-time control network element and a real-time control network element. The non-real-time control network element may be connected to at least one real-time control network element, and the real-time control network element can be connected to at least one execution network element. One execution network element may be further connected to another execution network element.

The non-real-time control network element is a network element configured to perform non-real-time control processing in a base station system, and is configured to configure a command or a parameter used in a real-time control processing process for the real-time control network element and/or the execution network element. The non-real-time control network element may be a network element that supports a non-real-time wireless higher layer protocol stack function. For example, the non-real-time control network element may be a central unit (central unit, CU) in a conventional base station system. For example, the non-real-time control network element may be a non-real-time control unit that is independent of the CU in the conventional technology and that can implement a function of the non-real-time control network element, or may be a network element implemented by combining the CU in the conventional technology and the foregoing non-real-time control unit. Optionally, the non-real-time control network element may further have a part of baseband processing functions. In this case, the non-real-time control network element may be a baseband unit (base band unit, BBU).

The real-time control network element is a network element configured to perform real-time control processing in the base station system, and is configured to control, based on a command or a parameter configured by the non-real-time control network element, the execution network element to perform a real-time control function. The real-time control network element is a network element or a device having a baseband signal processing function, or a device having a radio signal processing function for managing an access network (radio access network, RAN). The real-time control network element can complete baseband signal processing functions such as coding, multiplexing, modulation, and spreading, can complete a function of processing signaling from the execution network element (for example, a radio unit or an antenna device), and can implement functions of local management and remote operation and maintenance on the execution network element. Optionally, the real-time control network element is a layer 2 function network element that processes a physical layer function and a real-time requirement. For example, the real-time control network element may be a distributed unit (distributed unit, DU). For example, the real-time control network element may be a real-time control unit that is independent of the DU in the conventional technology and that can implement a function of the real-time control network element, or may be a network element implemented by combining the DU in the conventional technology and the foregoing real-time control unit. In addition, the real-time control network element may also be a baseband unit BBU.

The execution network element is a network element that executes a real-time control service in the base station system. The execution network element may receive real-time control information from the real-time control network element, and then perform corresponding real-time control service processing based on the real-time control information. The execution network element may be a network element that processes a service related to a radio signal (for example, an intermediate frequency signal or a radio frequency signal), for example, a radio unit (radio unit, RU), a remote radio unit (remote radio unit, RRU), and a remote radio head (remote radio head, RRH). The execution network element may alternatively be an antenna device connected to the foregoing network element that processes an intermediate radio frequency-related service, for example, an antenna feeder device (antenna line device, ALD) (also referred to as an antenna line device). In addition, the execution network element may be further a combination of the foregoing radio unit and the antenna device. For example, in a 5G NR system, the execution network element may alternatively be an active antenna processing unit (active antenna unit, AAU), that is, a processing unit that integrates an RRU (or an RRH) and an antenna device.

It should be understood that the intermediate network element may be configured to connect the real-time control network element and the execution network element, or may be configured to connect one execution network element and another execution network element. For example, if the real-time control network element is a baseband unit and the execution network element is a wireless unit, the intermediate network element may be an intermediate unit (baseband radio middle unit, BRMU) that connects the baseband unit and the wireless unit (for example, a baseband gateway, a radio frequency hub RRU hub, and various extended network elements); or if the execution network element is a wireless unit and the antenna device is another execution network element that needs to be connected to the wireless unit, the intermediate network element may also be an intermediate unit (radio antenna middle unit, RAMU) that connects the wireless unit and the antenna device. It should be understood that, when the intermediate network element is a BRMU, the intermediate network element may have a part of functions of a connected baseband unit (for example, a DU or a BBU) or wireless unit (for example, an RU or an RRU), to help interconnect baseband units having different performance parameters (for example, device versions, device interfaces, or protocol versions) and wireless units on both sides having different performance parameters. When the intermediate network element is an RAMU, the intermediate network element may have a part of functions of a connected radio unit (for example, an RU or an RRU) or an antenna device (for example, an ALD), to help interconnect wireless units and antenna devices having different performance parameters (for example, device versions, device interfaces, or protocol versions) on both sides.

In a possible design, the first network device may be an open distributed unit (open distributed unit, O-DU), and the second network device may be an open radio unit (open radio unit, O-RU). For example, FIG. 2 is a diagram of a composition of a base station system according to an embodiment of this application. As shown in FIG. 2, a base station system 20 may include an O-DU 21 and at least one O-RU 22. The O-DU 21 and the O-RU 22 are communicatively connected. In this embodiment of this application, the O-DU 21 may be configured to schedule a slot resource, and the O-RU 22 may transmit a signal with a terminal device based on the slot resource scheduled by the O-DU 21. The O-DU 21 may send a first message to the O-RU 22, where the first message includes beam identification information, and the beam identification information indicates whether to perform beam weighting processing on the transmitted signal in the first slot. Based on the indication of the beam identification information, the O-RU 22 may not perform beam weighting processing on the transmitted signal in the first slot, or may perform beam weighting processing on the transmitted signal in the first slot.

The O-DU 21 is an open control network element, and is responsible for controlling and managing an entire wireless network system. The O-RU 22 is an open radio frequency network element, and is responsible for performing radio frequency signal processing and radio frequency signal transmission at a physical layer. The O-DU and the O-RU may communicate with each other through an optical fiber or a wireless connection, and operate together to provide a wireless communication service.

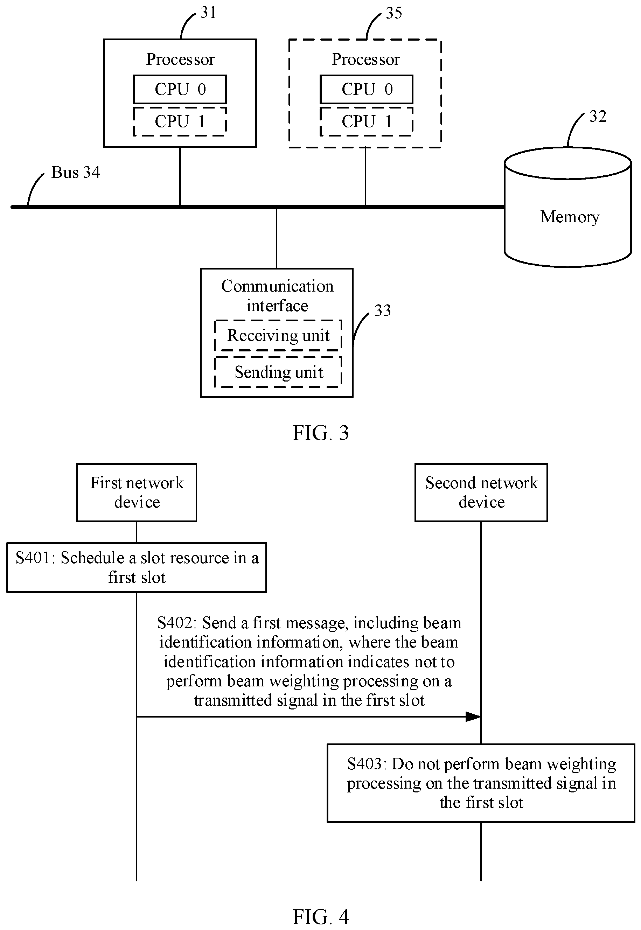

FIG. 3 is a diagram of a composition of a network device according to an embodiment of this application. The network device may be the first network device or the second network device. As shown in FIG. 3, the network device may include at least one processor 31, a memory 32, a communication interface 33, and a bus 34.

The processor 31 is a control center of the network device, and may be one processor or may be a general term of a plurality of processing elements. For example, the processor 31 may be a central processing unit (central processing unit, CPU), or may be an application-specific integrated circuit (application-specific integrated circuit, ASIC), or may be configured as one or more integrated circuits implementing embodiments of this application, for example, one or more microprocessors (digital signal processors, DSPs), or one or more field programmable gate arrays (field programmable gate arrays, FPGAs).

The processor 31 may run or execute a software program stored in the memory 32, and invoke data stored in the memory 32, to perform various functions of the network device. For example, when the network device is a structure of the first network device, the network device may perform the steps performed by the first network device in the communication method provided in embodiments of this application. For another example, when the network device is a structure of the second network device, the network device may perform the steps performed by the second network device in the communication method provided in embodiments of this application.

In specific implementation, in an embodiment, the processor 31 may include one or more CPUs, for example, a CPU 0 and a CPU 1 shown in FIG. 3.

In a specific implementation, in an embodiment, the network device may include a plurality of processors, for example, the processor 31 and a processor 35 shown in FIG. 3. Each of the processors may be a single-core processor (single-CPU), or may be a multi-core processor (multi-CPU). The processor herein may be one or more devices, circuits, and/or processing cores configured to process data (for example, computer program instructions).

The memory 32 may store a software program of the method steps performed by the network device, and the processor 31 controls execution of the software program. The memory 32 may be a read-only memory (read-only memory, ROM) or another type of static storage device that can store static information and instructions, or a random access memory (random access memory, RAM) or another type of dynamic storage device that can store information and instructions. The memory may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Bluray disc, or the like), or magnetic disk storage medium or another magnetic storage device, or any other medium that can be used to carry or store expected program code in a form of instructions or a data structure and that is accessible by a computer, but is not limited thereto.

The memory 32 may exist independently and be connected to the processor 31 through the bus 34. Alternatively, the memory 32 may be integrated with the processor 31. This is not limited herein. The communication interface 33 uses any apparatus such as a transceiver, and is configured to communicate with another device or a communication network. The communication interface 33 may be an Ethernet interface, a radio access network (radio access network, RAN) interface, a wireless local area network (wireless local area network, WLAN) interface, or the like. The communication interface 33 may include a receiving unit for implementing a receiving function and a sending unit for implementing a sending function.

The bus 34 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 3, but this does not mean that there is only one bus or only one type of bus.

Although the bus 34 is used in FIG. 3, it may be understood that the bus may also be replaced with a connection relationship in another form, and is not limited to the bus itself.

The following uses the base station system shown in FIG. 2 as an example to describe the communication method provided in embodiments of this application with reference to the accompanying drawings.

It should be understood that with evolution of the network architecture and emergence of a new service scenario, the technical solutions provided in embodiments of this application are also applicable to similar technical problems.

It should be noted that, in the description of this application, words such as "first" and "second" are merely used for distinguishing description, and are not used to specifically limit a feature. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more.

FIG. 4 is a schematic flowchart of a communication method according to an embodiment of this application. As shown in FIG. 4, the communication method may include S401 to S403. S401: A first network device schedules a slot resource in a first slot.

The slot resource in the first slot is used to transmit a signal between a network device and a terminal device. The first slot may be any one or more slots, or the first slot may be each slot.

Slot resource scheduling (slot resource scheduling) refers to a process of properly allocating and scheduling a slot resource in a wireless communication system. The communication system may divide time into a series of slots, and each slot is used to transmit data of one or more users. A purpose of slot resource scheduling is to maximize a system throughput, improve transmission quality for the user, and meet communication requirements of different users.

Slot resource scheduling usually includes a plurality of aspects such as slot allocation, slot scheduling, power control, and frequency selection. Slot allocation refers to determining, based on a communication requirement of user equipment (UE) and a resource status of the communication system, a quantity of slots and a location of a slot allocated to each UE. Slot scheduling refers to dynamically adjusting slot allocation of the UE based on factors such as UE priorities and communication quality to maximize system performance. Power control refers to adjusting transmit power of the UE based on signal quality and interference of the UE, to improve a capacity and coverage of the communication system. Frequency selection refers to selecting a proper frequency resource for communication based on utilization of a spectrum resource, to reduce interference and improve a system capacity.

In other words, that the first network device schedules the slot resource in the first slot may mean that the first network device allocates the first slot to the UE, and schedules the first slot as a slot resource for transmitting a signal (for example, transmitting service data) with the UE. After scheduling of the slot resource in the first slot is completed, a second network device transmits the signal with the UE in the first slot by using the slot resource in the first slot. For example, when the first slot is an uplink slot, the second network device may receive uplink data from the UE in the first slot, and when the second slot is a downlink slot, the second network device may send downlink data to the UE in the first slot.

S402: The first network device may send a first message to the second network device, where the first message includes beam identification information, and the beam identification information indicates not to perform beam weighting processing on the transmitted signal in the first slot. Correspondingly, the second network device receives the first message.

In this embodiment, the first network device may send the first message to the second network device after scheduling the slot resource in the first slot. The first message may include the beam identification information, for example, an identifier ID (beamID). The beam identification information may indicate, to the second network device, not to perform beam weighting processing on the transmitted signal in the first slot.

Optionally, the first message may be a message directly sent by the first network device to the second network device through a communication interface between the first network device and the second network device, or a message indirectly sent by the first network device to the second network device through another communication interface. This is not limited in this application. S403: The second network device does not perform beam weighting processing on the transmitted signal in the first slot.

For example, when the beam identification information indicates not to perform beam weighting processing on the transmitted signal in the first slot, that is, when the beam identification information indicates no, the second network device may skip performing beam weighting processing on the transmitted signal in the first slot.

For example, when transmitting a signal with the UE in the first slot, the second network device may not perform beam weighting processing on the transmitted signal in the first slot.

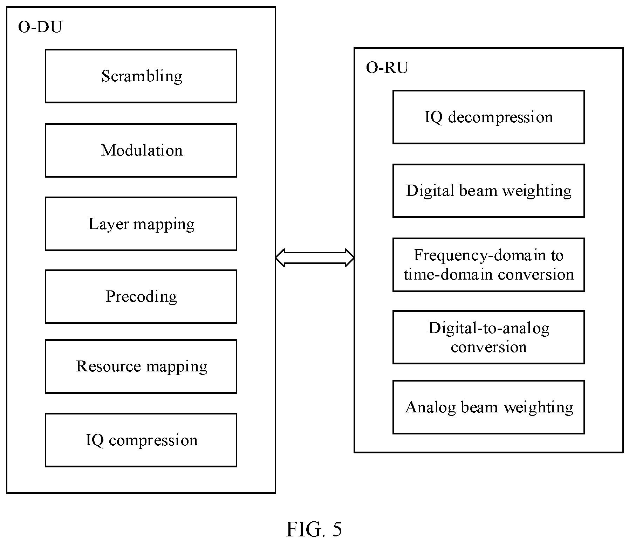

For example, the first network device is an O-DU, and the second network device is an O-RU. An open radio access network (open radio access network, O-RAN) protocol specifies function division of the O-DU and the O-Ru in an eNB system architecture or a gNB system architecture. NR downlink physical downlink shared channel (physical downlink shared channel, PDSCH) data is used as an example. FIG. 5 is a diagram of function division between an O-DU and an O-RU according to an embodiment of this application. As shown in FIG. 5, the O-DU may perform functions such as scrambling (scrambling), modulation (modulation), layer mapping (layer mapping), precoding (precoding), resource mapping (RE Mapping), and IQ compression (IQ compression) on downlink data. The O-RU may perform functions such as IQ decompression (IQ decompression), digital beam weighting (digital beamforming) processing, frequency-domain to time-domain conversion (iFFT and CP addition) processing, digital-to-analog conversion (digital to analog) processing, and analog beam weighting (analog beamforming) processing on the downlink data.

The O-DU may receive a digital signal flow from a core network. The digital signal flow may be an encoded and modulated data flow, and needs to be decoded and demodulated to restore original data. In the O-DU, the modulation function may decode and demodulate the received digital signal flow, and convert the digital signal flow into the original data. The layer mapping function may map a transmitted signal at a physical layer to different transport layers, to perform decoding on a receiver side. For example, data at a transport layer may be divided into data at a plurality of layers, and transmission is performed at each layer through a different channel. The precoding function may perform linear combination on a plurality of data flows, so that different data flows can be better separated on the receiver side, thereby improving reliability and a capacity of signal transmission. The resource mapping function may map a logical channel to a physical resource element, and determine a location of each logical channel on a physical resource, to facilitate scheduling and allocation in a transmission process. The IQ signal compression function may be used to compress an IQ signal.

The O-RU may include a radio frequency module, and the radio frequency module may receive the digital signal flow from the O-DU, and convert the digital signal flow into a radio frequency signal. The IQ signal decompression function may be used to decompress an IQ signal obtained through compression by the O-DU. The digital beam weighting function may be used to perform beam weighting on a digital signal. The frequency-domain to time-domain conversion function may be used to convert the digital signal flow from frequency domain to time domain. The digital-to-analog conversion function may be used to convert the digital signal flow into an analog signal flow. The analog beam weighting function may be used to perform analog beam weighting on the analog signal flow. The radio frequency module may further amplify a modulated radio frequency signal via a PA, to increase an amplitude of the signal, so as to achieve proper transmission power. The radio frequency module may further perform frequency selection on the radio frequency signal via a filter, to filter out an unnecessary frequency component, so that a spectrum of the signal meets a specified bandwidth requirement. The radio frequency module may perform wireless transmission on a modulated and amplified radio frequency signal through an antenna, to send downlink data to the UE.

In this embodiment, for each UE, the O-DU may schedule a slot resource for transmitting a signal between the O-DU and the UE, for example, the slot resource in the first slot. After scheduling is completed, the O-DU may send a first message to the O-RU, where the first message includes beam identification information, and the beam identification information may indicate not to perform beam weighting processing on the transmitted signal in the first slot. After receiving the downlink data sent by the O-DU, the O-RU may send the downlink data to the UE in the first slot through the transmitted signal in the first slot. When the beam identification information in the first message indicates not to perform beam weighting processing on the transmitted signal in the first slot, the O-RU may not perform beam weighting processing on the transmitted signal in the first slot when sending the downlink data to the UE in the first slot.

In a possible design, not performing beam weighting processing on the transmitted signal in the first slot may refer to not performing analog beam weighting processing on the transmitted signal in the first slot.

In another possible design, not performing beam weighting processing on the transmitted signal in the first slot may refer to not performing digital beam weighting processing on the transmitted signal in the first slot.

In still another possible design, not performing beam weighting processing on the transmitted signal in the first slot may refer to not performing digital beam weighting processing and analog beam weighting processing on the transmitted signal in the first slot.

For example, that the O-RU does not perform analog beam weighting processing on the transmitted signal in the first slot may include: The O-RU disables a phase shifter in the first slot, to not perform analog beam weighting processing on the transmitted signal in the first slot. In other words, not performing analog beam weighting processing on the transmitted signal in the first slot may be disabling the phase shifter in the first slot.

For example, that the O-RU does not perform digital beam weighting processing on the transmitted signal in the first slot may include: The O-RU disables, in the first slot, a digital signal processor (digital signal processor, DSP) configured to implement the digital beam weighting function, or does not perform a step of performing digital beam weighting processing via a digital signal processor. Optionally, the digital signal processor configured to implement the digital beam weighting function may be a dedicated processor for implementing digital beam weighting processing.

In this embodiment, the first network device sends the first message to the second network device. The beam identification information in the first message indicates not to perform beam weighting processing on the transmitted signal in the first slot. The second network device does not perform beam weighting processing on the transmitted signal in the first slot based on the indication of the beam identification information. This can effectively reduce energy consumption occupied by performing a beam weighting processing function, thereby reducing energy consumption of the second network device or an entire base station system.

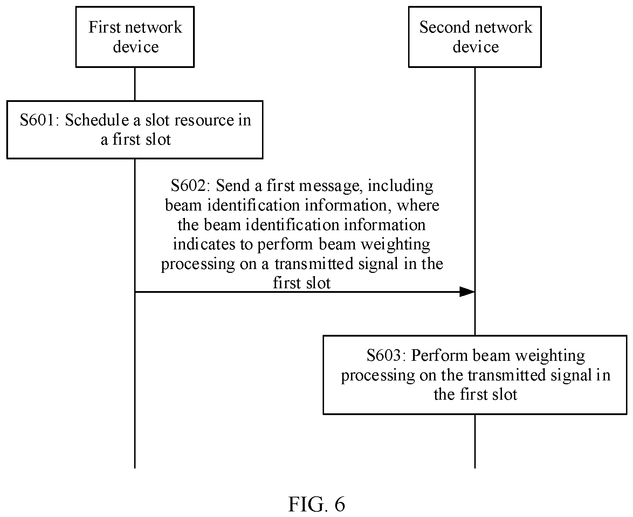

In some other embodiments, the beam identification information in the first message may alternatively indicate to perform beam weighting processing on the transmitted signal in the first slot. For example, FIG. 6 is another schematic flowchart of a communication method according to an embodiment of this application. As shown in FIG. 6, the communication method may include S601 to S603.

S601: A first network device schedules a slot resource in a first slot.

The slot resource in the first slot is used to transmit a signal between a network device and a terminal device.

For S601, refer to the foregoing description of S401. Details are not described herein again. S602: The first network device sends a first message to a second network device, where the first message includes beam identification information, and the beam identification information indicates to perform beam weighting processing on the transmitted signal in the first slot.

For S602, refer to the foregoing description of S402. A difference lies in that, in this embodiment, the beam identification information indicates to perform beam weighting processing on the transmitted signal in the first slot.

S603: The second network device performs beam weighting processing on the transmitted signal in the first slot.

Similar to S403, in this embodiment, when the beam identification information in the first message indicates to perform beam weighting processing on the transmitted signal in the first slot, when transmitting a signal with UE in the first slot, the second network device may perform beam weighting processing on the transmitted signal in the first slot.

For example, a scenario in which downlink data is sent to the UE in the foregoing embodiment is also used as an example. After receiving the downlink data sent by the O-DU, the O-RU may send the downlink data to the UE in the first slot through the transmitted signal in the first slot. When the beam identification information in the first message indicates to perform beam weighting processing on the transmitted signal in the first slot, the O-RU may perform beam weighting processing on the transmitted signal in the first slot when sending the downlink data to the UE in the first slot.

Similar to the foregoing embodiment, beam weighting processing may include digital beam weighting processing and/or analog beam weighting processing.

For example, that the O-RU performs beam weighting processing on the transmitted signal in the first slot may include: The O-RU keeps a phase shifter enabled in the first slot, to perform beam weighting processing on the transmitted signal in the first slot via the phase shifter.

For example, that the O-RU performs digital beam weighting processing on the transmitted signal in the first slot may include: The O-RU keeps, in the first slot, a digital signal processor (digital signal processor, DSP) configured to implement the digital beam weighting function enabled, or performs a step of performing digital beam weighting processing via a digital signal processor. Optionally, the first slot in this embodiment of this application may be an uplink slot, or may be a downlink slot. In other words, the first slot includes an uplink slot and/or a downlink slot. The communication method provided in this embodiment of this application is applicable to both a scenario in which the first slot is an uplink slot and a scenario in which the first slot is a downlink slot. This is not limited herein.

Based on the foregoing embodiments, this application actually separately provides a communication method applied to a first network device and a communication method applied to a second network device. In the communication method applied to the first network device, the first network device may schedule a slot resource in a first slot, and send a first message, where the first message includes beam identification information, and the beam identification information indicates whether to perform beam weighting processing on a transmitted signal in the first slot. In the communication method applied to the second network device, the second network device may receive a first message, where the first message includes beam identification information, and the beam identification information indicates whether to perform beam weighting processing on a transmitted signal in a first slot; and when the beam identification information indicates no, the second network device skips performing beam weighting processing on the transmitted signal in the first slot; or when the beam identification information indicates yes, the second network device performs beam weighting processing on the transmitted signal in the first slot.

Optionally, in this embodiment of this application, the first network device may determine that the beam identification information specifically indicates whether to perform beam weighting processing on the transmitted signal in the first slot.

For example, in some embodiments, for some scenarios in which service data is transmitted, the first network device may determine that the beam identification information indicates to perform beam weighting processing on the transmitted signal in the first slot. For other scenarios in which service data is transmitted, the first network device may determine that the beam identification information indicates not to perform beam weighting processing on the transmitted signal in the first slot. Service data transmission scenarios in which the beam identification information needs to indicate not to perform beam weighting processing on the transmitted signal in the first slot may be predefined, or may be identified by the first network device according to a predefined rule. This is not limited herein.

In some other embodiments, after completing scheduling of the slot resource in the first slot, the first network device may determine, based on the scheduling information of the first slot, that the beam identification information indicates to perform beam weighting processing on the transmitted signal in the first slot, or the beam identification information indicates not to perform beam weighting processing on the transmitted signal in the first slot.

For example, in a possible design, the communication method may further include: The first network device obtains scheduling information, where the scheduling information indicates whether scheduling is performed in the first slot. When the scheduling information indicates that no scheduling is performed in the first slot, the beam identification information indicates not to perform beam weighting processing on the transmitted signal in the first slot. When the scheduling information indicates that scheduling is performed in the first slot, the beam identification information indicates to perform beam weighting processing on the transmitted signal in the first slot.

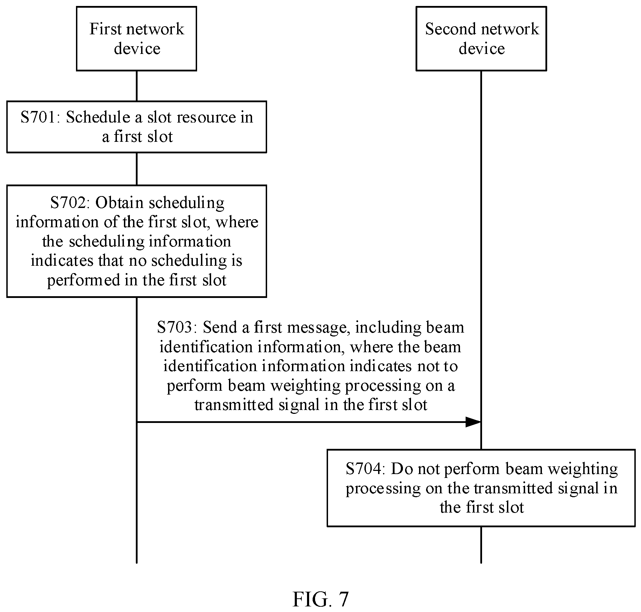

For example, FIG. 7 is still another schematic flowchart of a communication method according to an embodiment of this application. As shown in FIG. 7, in a scenario in which no scheduling is performed in a first slot, the communication method may include S701 to S704.

S701: A first network device schedules a slot resource in a first slot.

For S701, refer to the foregoing description of S401. Details are not described herein again. S702: The first network device obtains scheduling information, where the scheduling information indicates that no scheduling is performed in the first slot.

The scheduling information may be a scheduling result of the slot resource in the first slot.

For example, the first slot is a downlink slot. In a slot resource scheduling process, the first network device (for example, the O-DU) may make a scheduling decision based on factors such as a network condition and a UE requirement, to determine downlink data that needs to be sent. When there is no downlink data that needs to be sent in the downlink slot, if a scheduling result of a slot resource in the downlink slot may be empty, it indicates that no scheduling is performed in the downlink slot. When there is downlink data that needs to be sent in the downlink slot, if a scheduling result of a slot resource in the downlink slot is not empty, it indicates that scheduling is performed in the downlink slot.

Similarly, for an uplink slot, in a slot resource scheduling process, the first network device (for example, the O-DU) may make a scheduling decision based on factors such as a network condition and a UE requirement, to determine whether there is uplink data that needs to be received by the O-RU. When there is no uplink data that needs to be received in the uplink slot, if a scheduling result of a slot resource in the uplink slot may be empty, it indicates that no scheduling is performed in the uplink slot. When there is uplink data that needs to be received in the uplink slot, if a scheduling result of a slot resource in the uplink slot is not empty, it indicates that scheduling is performed in the uplink slot.

The scheduling information in S702 may indicate, based on the scheduling result of the slot resource in the first slot, whether scheduling is performed in the first slot. When the scheduling information indicates that no scheduling is performed in the first slot, S703 may be performed. S703: The first network device sends a first message to a second network device, where the first message includes beam identification information, and the beam identification information indicates not to perform beam weighting processing on the transmitted signal in the first slot. Correspondingly, the second network device receives the first message.

S704: The second network device does not perform beam weighting processing on the transmitted signal in the first slot.

For S703 and S704, refer to the foregoing descriptions of S402 and S403. Details are not described herein again either.

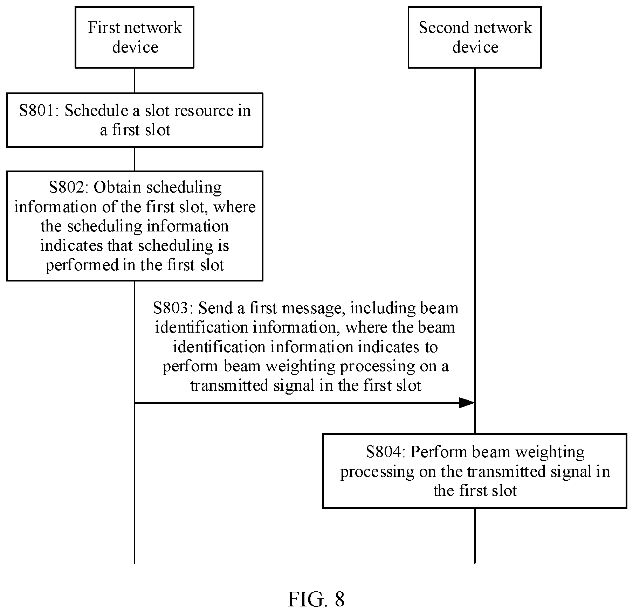

For example, FIG. 8 is still another schematic flowchart of a communication method according to an embodiment of this application. As shown in FIG. 8, in a scenario in which scheduling is performed in a first slot, the communication method may include S801 to S804.

S801: A first network device schedules a slot resource in a first slot.

For S801, refer to the foregoing description of S401. Details are not described herein again. S802: The first network device obtains scheduling information, where the scheduling information indicates that scheduling is performed in the first slot.

As described in S702, the scheduling information may indicate, based on the scheduling result of the slot resource in the first slot, whether scheduling is performed in the first slot. When the scheduling information indicates that scheduling is performed in the first slot, S803 may be performed.

S803: The first network device sends a first message to a second network device, where the first message includes beam identification information, and the beam identification information indicates to perform beam weighting processing on a transmitted signal in the first slot. Correspondingly, the second network device receives the first message.

S804: The second network device performs beam weighting processing on the transmitted signal in the first slot.

For S803 and S804, refer to the foregoing descriptions of S602 and S603. Details are not described herein again either.

In this design, the first network device may determine, based on the scheduling information, whether scheduling is performed in the first slot, and determine, based on whether scheduling is performed in the first slot, that the beam identification information indicates whether to perform beam weighting processing on the transmitted signal in the first slot. When the scheduling information indicates that no scheduling is performed in the first slot, the beam identification information indicates not to perform beam weighting processing on the transmitted signal in the first slot. When the scheduling information indicates that scheduling is performed in the first slot, the beam identification information indicates to perform beam weighting processing on the transmitted signal in the first slot. In this design, in a scenario in which no scheduling is performed in an uplink slot or a downlink slot, that is, no service data needs to be transmitted, the beam identification information may indicate, to the second network device, not to perform beam weighting processing on the transmitted signal in the first slot, so that energy consumption is reduced by not performing beam weighting processing in a scenario in which no service data needs to be transmitted, thereby reducing energy consumption for the network device without affecting service data transmission quality.

In a possible design, the first message may further include scheduling type information. The scheduling type information indicates whether scheduling is performed in the first slot. For the first network device, the first network device may determine, based on the indication of the scheduling information, that the scheduling type information indicates whether scheduling is performed in the first slot, and determine, based on the indication of the scheduling type information, that the beam identification information indicates to perform beam weighting processing on the transmitted signal in the first slot, or the beam identification information indicates not to perform beam weighting processing on the transmitted signal in the first slot. For example, when the scheduling information indicates that no scheduling is performed in the first slot, the scheduling type information may indicate that no scheduling is performed in the first slot; and when the scheduling type information indicates that no scheduling is performed in the first slot, the beam identification information indicates not to perform beam weighting processing on the transmitted signal in the first slot. Alternatively, when the scheduling information indicates that scheduling is performed in the first slot, the scheduling type information may indicate that scheduling is performed in the first slot; and when the scheduling type information indicates that scheduling is performed in the first slot, the beam identification information indicates to perform beam weighting processing on the transmitted signal in the first slot.

Compared with the foregoing embodiment, in this embodiment, the first message may further include the scheduling type information indicating whether scheduling is performed in the first slot.

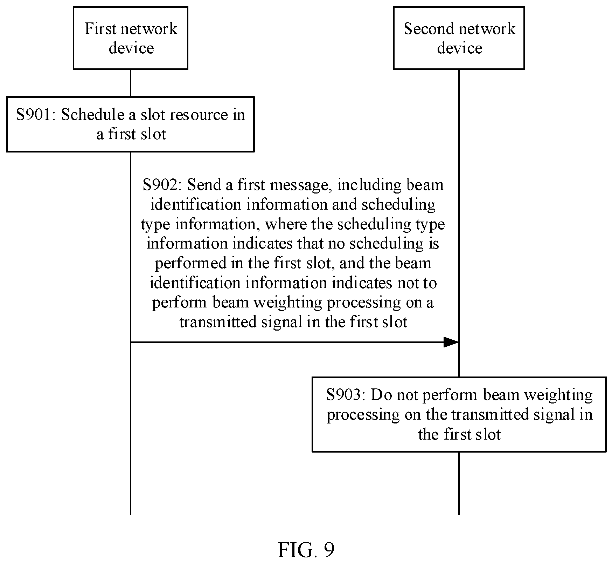

For example, FIG. 9 is still another schematic flowchart of a communication method according to an embodiment of this application. As shown in FIG. 9, in a scenario in which no scheduling is performed in a first slot, the communication method may include S901 to S903.

S901: A first network device schedules a slot resource in a first slot.

For S901, refer to the foregoing descriptions of S401, S701, S702, and the like. Details are not described herein again.

S902: The first network device sends a first message to a second network device, where the first message includes beam identification information and scheduling type information, the scheduling type information indicates that no scheduling is performed in the first slot, and the beam identification information indicates not to perform beam weighting processing on a transmitted signal in the first slot.

Correspondingly, the second network device receives the first message.

For example, that the scheduling type information indicates that no scheduling is performed in the first slot or the scheduling type information indicates that scheduling is performed in the first slot may be determined by a scheduling result (for example, the scheduling information) of the slot resource in the first slot. That the beam identification information indicates whether to perform beam weighting processing on the transmitted signal in the first slot may be determined based on the indication of the scheduling type information. When the scheduling type information indicates that no scheduling is performed in the first slot, the beam identification information indicates not to perform beam weighting processing on the transmitted signal in the first slot. Alternatively, when the scheduling type information indicates that scheduling is performed in the first slot, the beam identification information indicates to perform beam weighting processing on the transmitted signal in the first slot.

S903: The second network device does not perform beam weighting processing on the transmitted signal in the first slot.

For S903, refer to the foregoing description of S403. Details are not described herein again either. Similar to the scenario shown in FIG. 9, in the scenario in which scheduling is performed in the first slot, the first message may also include the beam identification information and the scheduling type information. A difference lies in that the scheduling type information indicates that scheduling is performed in the first slot, and the beam identification information indicates to perform beam weighting processing on the transmitted signal in the first slot. The second network device may perform beam weighting processing on the transmitted signal in the first slot based on the indication of the scheduling type information and the indication of the beam identification information. This is not described herein by using the accompanying drawings.

In this design, the first message sent by the first network device to the second network device may include the beam identification information and the scheduling type information, the scheduling type information may indicate whether scheduling is performed in the first slot, and the beam identification information indicates whether to perform beam weighting processing on the transmitted signal in the first slot. When the scheduling type information indicates that scheduling is performed in the first slot, the beam identification information indicates to perform beam weighting processing on the transmitted signal in the first slot. When the scheduling type information indicates that no scheduling is performed in the first slot, the beam identification information indicates not to perform beam weighting processing on the transmitted signal in the first slot.

In this design, in a scenario in which no scheduling is performed in an uplink slot or a downlink slot, that is, no service data needs to be transmitted, the scheduling type information may indicate, to the second network device, that no scheduling is performed in the uplink slot or the downlink slot, and the beam identification information may indicate, to the second network device, not to perform beam weighting processing on the transmitted signal in the first slot. In a scenario in which scheduling is performed in an uplink slot or a downlink slot, that is, service data needs to be transmitted, the scheduling type information may indicate, to the second network device, that scheduling is performed in the uplink slot or the downlink slot, and the beam identification information may indicate, to the second network device, to perform beam weighting processing on the transmitted signal in the first slot. In this way, energy consumption is reduced by not performing beam weighting processing in the scenario in which no service data needs to be transmitted. In this design, when determining that the beam identification information indicates whether to perform beam weighting processing on the transmitted signal in the first slot, the first network device only needs to make a decision based on the indication of the scheduling type information, and does not need to pay attention to specific scheduling content of the first slot. For the second network device, the received first message includes the scheduling type information and the beam identification information. The second network device may not perform beam weighting processing on the transmitted signal in the first slot only when the scheduling type information indicates that no scheduling is performed in the first slot and the beam identification information indicates not to perform beam weighting processing on the transmitted signal in the first slot. In another case, for example, the scheduling type information indicates that no scheduling is performed in the first slot, and the beam identification information indicates to perform beam weighting processing on the transmitted signal in the first slot; or the scheduling type information indicates that scheduling is performed in the first slot, the beam identification information indicates not to perform beam weighting processing on the transmitted signal in the first slot. The second network device may perform beam weighting processing on the transmitted signal in the first slot. This can reduce a possibility that UE service data transmission quality is affected due to an incorrect indication of the scheduling type information and an incorrect indication of the beam identification information. The second network device may learn that because the scheduling result in the first slot is empty, the second network device does not perform beam weighting processing on the transmitted signal in the first slot.

In a possible design, when the first message is sent through a communication interface between the first network device and the second network device, the first message may include a control plane message between the first network device and the second network device.

The control plane message may include resource information, the resource information may indicate the slot resource in the first slot, and the control plane message may indicate that scheduling of the slot resource in the first slot is completed.

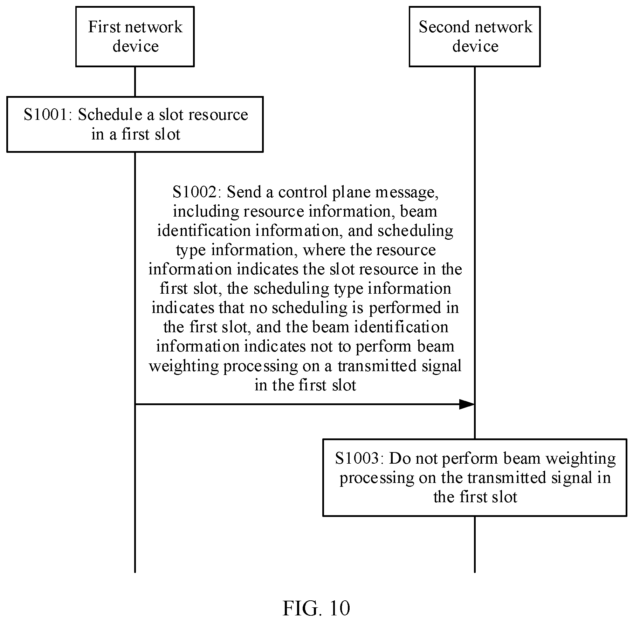

For example, in a scenario in which no scheduling is performed in a first slot, FIG. 10 is still another schematic flowchart of a communication method according to an embodiment of this application. As shown in FIG. 10, the communication method may include S1001 to S1003. S1001: A first network device schedules a slot resource in a first slot.

For S1001, refer to the foregoing descriptions of S401, S701, S702, and the like. Details are not described herein again.

S1002: The first network device sends a control plane message to a second network device, where the control plane message includes resource information, beam identification information, and scheduling type information, the resource information indicates the slot resource in the first slot, the scheduling type information indicates that no scheduling is performed in the first slot, and the beam identification information indicates not to perform beam weighting processing on a transmitted signal in the first slot.

Correspondingly, the second network device receives the control plane message.

For example, the control plane message may be a scheduling and beamforming commands (scheduling and beamforming commands) message. In the scheduling and beamforming commands message, the scheduling type information may be a "section type" field, and the beam identification information may be a "beamID" field. In a scenario in which no scheduling is performed in the first slot, the "section type" field may indicate that no scheduling is performed in the first slot, and the "beamID" field may indicate not to perform beam weighting processing on the transmitted signal in the first slot.

The resource information may indicate a slot in which the slot resource in the first slot is. The second network device may learn of, based on the indication of the resource information, a slot in which the second network device transmits a signal with UE.

In a possible implementation, when a value of the "section type" field is 0, it indicates that no scheduling is performed in the first slot; and when a value of the "beamID" field is 0, it indicates not to perform beam weighting processing on the transmitted signal in the first slot.

Optionally, in some other implementations, when a value of the "section type" field is alternatively another value, it indicates that no scheduling is performed in the first slot; and when a value of the "beamID" field is alternatively another value, it indicates not to perform beam weighting processing on the transmitted signal in the first slot. This is not limited in this application. S1003: The second network device does not perform beam weighting processing on the transmitted signal in the first slot.

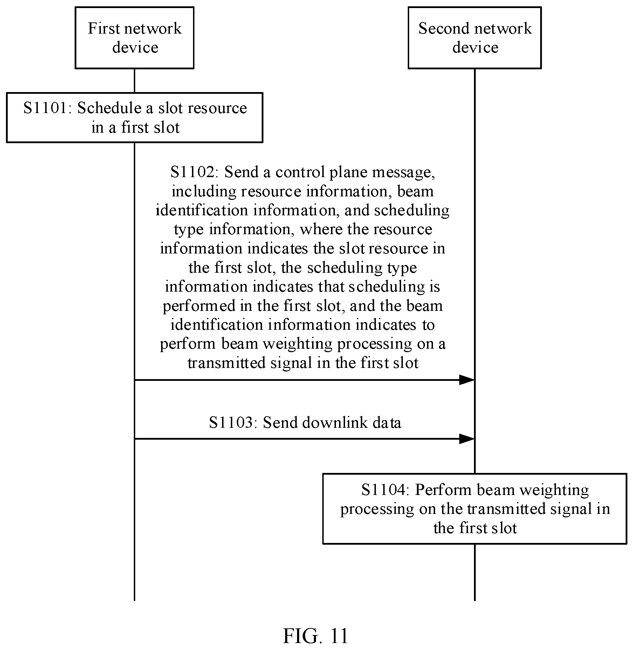

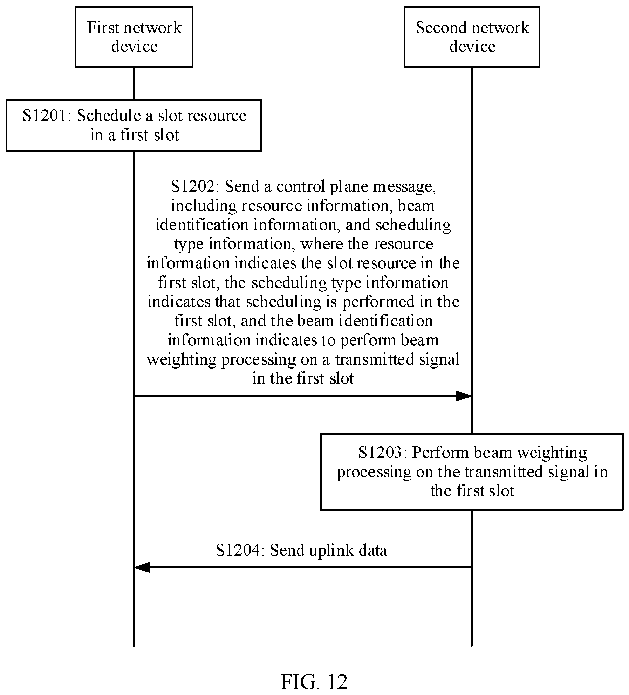

For S1003, refer to the foregoing description of S403. Details are not described herein again either. The embodiment shown in FIG. 10 shows an implementation in which the first message is the control plane message in the scenario in which no scheduling is performed in the first slot. The first slot may be an uplink slot, or may be a downlink slot. In a scenario in which scheduling is performed in the first slot, when the first slot is a downlink slot, the first network device further needs to send downlink data to the second network device; or when the first slot is an uplink slot, after receiving uplink data, the second network device further needs to send the uplink data to the first network device. With reference to FIG. 11 and FIG. 12, an example in which the first message is a control plane message is still used below to separately describe a scenario in which scheduling is performed in a downlink slot and a scenario in which scheduling is performed in an uplink slot. For example, in a scenario in which a first slot is a downlink slot and scheduling is performed, FIG. 11 is still another schematic flowchart of a communication method according to an embodiment of this application. As shown in FIG. 11, the communication method may include S1101 to S1104.

S1101: A first network device schedules a slot resource in a first slot.

For S1101, refer to the foregoing descriptions of S401, S701, S702, and the like. Details are not described herein again.

S1102: The first network device sends a control plane message to a second network device, where the control plane message includes resource information, beam identification information, and scheduling type information, the resource information indicates the slot resource in the first slot, the scheduling type information indicates that scheduling is performed in the first slot, and the beam identification information indicates to perform beam weighting processing on a transmitted signal in the first slot.

Correspondingly, the second network device receives the control plane message.

For example, when the control plane message is a scheduling and beamforming commands message, the scheduling type information is a "section type" field, and the beam identification information is a "beamID" field, when a value of the "section type" field is not 0, it indicates that scheduling is performed in the first slot; and when a value of the "beamID" field is not 0, it indicates that beam weighting processing is performed on the transmitted signal in the first slot. The scheduling and beamforming commands message indicates that scheduling in the first slot is completed.

After sending the control plane message to the second network device, the first network device may further perform S1103.

S1103: The first network device sends downlink data to the second network device. Correspondingly, the second network device receives the downlink data.

The downlink data may be service data that needs to be delivered to UE in the first slot by using the second network device. After receiving the downlink data, the second network device may deliver the downlink data to the UE in the first slot based on the indication of the resource information. When delivering the downlink data to the UE, the second network device may perform S1104 to perform beam weighting processing on the transmitted signal in the first slot. S1104: The second network device performs beam weighting processing on the transmitted signal in the first slot.

For S1104, refer to the foregoing description of S603. Details are not described herein again either. For example, in a scenario in which a first slot is an uplink slot and scheduling is performed, FIG. 12 is still another schematic flowchart of a communication method according to an embodiment of this application. As shown in FIG. 12, the communication method may include S1201 to S1204. S1201: A first network device schedules a slot resource in a first slot.

For S1201, refer to the foregoing descriptions of S401, S701, S702, and the like. Details are not described herein again.

S1202: The first network device sends a control plane message to a second network device, where the control plane message includes resource information, beam identification information, and scheduling type information, the resource information indicates the slot resource in the first slot, the scheduling type information indicates that scheduling is performed in the first slot, and the beam identification information indicates to perform beam weighting processing on a transmitted signal in the first slot.

Correspondingly, the second network device receives the control plane message.

For S1202, refer to the foregoing description of S1102. Details are not described again.

S1203: The second network device performs beam weighting processing on the transmitted signal in the first slot.

For example, in the procedure shown in FIG. 12, the control plane message may indicate, to the second network device, that uplink data of UE needs to be received in the first slot, and the second network device may receive the uplink data of the UE in the first slot based on the indication of the resource information. When receiving the uplink data of the UE, the second network device may perform beam weighting processing on the transmitted signal in the first slot. For details of S1203, refer to the foregoing description of S603. Details are not described again.

The second network device may further perform S1204.

S1204: The second network device sends the uplink data to the first network device. Correspondingly, the first network device receives the uplink data.

For example, the first network device is an O-DU, and the second network device is an O-RU. For embodiments shown in FIG. 10 to FIG. 12, during specific implementation, the O-DU may schedule a slot resource in a first slot, and the slot resource in the first slot is used to transmit signals between the first network device and the second network device, and UE, for example, transmit service data. A scheduling result in the first slot may include that scheduling is performed and no scheduling is performed.

In a scenario in which the first slot is a downlink slot, when there is no downlink data that needs to be sent, no scheduling is performed in the first slot (a scheduling result is empty), and the O-DU does not send downlink data to the O-RU, to avoid unnecessary signal transmission and resource waste. The O-DU may send a control plane message to the O-RU, and notify, in the control plane message, the O-RU that no downlink data needs to be sent in the first slot. A specific notification manner is that no scheduling is performed in the first slot based on the scheduling type information in the control plane message. In addition, the beam identification information in the control plane message may further indicate not to perform beam weighting processing on the transmitted signal in the first slot. The O-RU may not perform beam weighting processing on the transmitted signal in the first slot based on the indication.

When there is downlink data that needs to be sent, scheduling is performed in the first slot (a scheduling result is not empty), and the O-DU may send a control plane message to the O-RU, and notify, in the control plane message, the O-RU that downlink data needs to be sent in the first slot. A specific notification manner is that scheduling is performed in the first slot based on the scheduling type information in the control plane message. In addition, the beam identification information in the control plane message may further indicate to perform beam weighting processing on the transmitted signal in the first slot. Then, the O-DU may send the downlink data to the O-RU. The O-RU may deliver the downlink data to the UE in the first slot through a radio channel based on the indication, and perform beam weighting processing on the transmitted signal in the first slot.

In a scenario in which the first slot is an uplink slot, when there is no uplink data that needs to be sent, no scheduling is performed in the first slot (a scheduling result is empty), and the O-DU may send a control plane message to the O-RU, and notify, in the control plane message, the O-RU that no uplink data needs to be received in the first slot. A specific notification manner is that scheduling is performed in the first slot based on the scheduling type information in the control plane message. In addition, the beam identification information in the control plane message may further indicate not to perform beam weighting processing on the transmitted signal in the first slot. The O-RU may not perform beam weighting processing on the transmitted signal in the first slot based on the indication.

When there is uplink data that needs to be sent, scheduling is performed in the first slot (a scheduling result is not empty), and the O-DU may send a control plane message to the O-RU, and notify, in the control plane message, the O-RU that uplink data needs to be received in the first slot. A specific notification manner is that scheduling is performed in the first slot based on the scheduling type information in the control plane message. In addition, the beam identification information in the control plane message may further indicate to perform beam weighting processing on the transmitted signal in the first slot. The O-RU may receive, in the first slot through a radio channel based on the indication, the uplink data sent by the UE, and perform beam weighting processing on the transmitted signal in the first slot. Then, the O-RU may send the uplink data to the O-DU.

In this design, the first message may be a control plane message sent through a network communication interface between the first network device and the second network device, for example, may be a scheduling and beamforming commands message. The scheduling and beamforming commands message is used as an example. The scheduling and beamforming commands message includes indication information indicating whether the second network device performs beam weighting processing. In a specific implementation, the indication information is a "section type" field and a "beamID" field. When a value of the "section type" field is not 0, it indicates that scheduling is performed in the first slot; and when a value of the "beamID" field is not 0, it indicates that beam weighting processing is performed on the transmitted signal in the first slot.

In this design, the existing control plane message may be used, and beam identification information is added to the control plane information, to implement a function of indicating, to the second network device, whether to perform beam weighting processing on the transmitted signal in the first slot. Therefore, implementation costs are low, for example, protocol modification costs are low.

In a possible design, the first message in the foregoing embodiments may further include at least one of the following identification information: compression identification information, filtering identification information, and symbol power saving identification information.

The compression identification information indicates whether to perform in-phase and quadrature-phase signal decompression or compression on the transmitted signal in the first slot. The filtering identification information indicates whether to perform filtering on the transmitted signal in the first slot. The symbol power saving identification information indicates whether to perform symbol power saving on the transmitted signal in the first slot.

After receiving the first message, the second network device may further process the transmitted signal in the first slot based on an indication of target identification information and based on at least one target identification information in the compression identification information, the filtering identification information, and the symbol power saving identification information that are included in the first message (for example, pieces of identification information in the compression identification information, the filtering identification information, and the symbol power saving identification information in the first message, where the pieces of identification information may be used as the target identification information).

For example, based on the indication of the compression identification information, the second network device may perform in-phase and quadrature-phase signal decompression or compression on the transmitted signal in the first slot or does not perform in-phase and quadrature-phase signal decompression or compression on the transmitted signal in the first slot. For another example, based on the indication of the filtering identification information, the second network device may perform filtering on the transmitted signal in the first slot or does not perform filtering on the transmitted signal in the first slot. For another example, based on the indication of the symbol power saving identification information, the second network device may perform symbol power saving on the transmitted signal in the first slot or does not perform symbol power saving on the transmitted signal in the first slot.

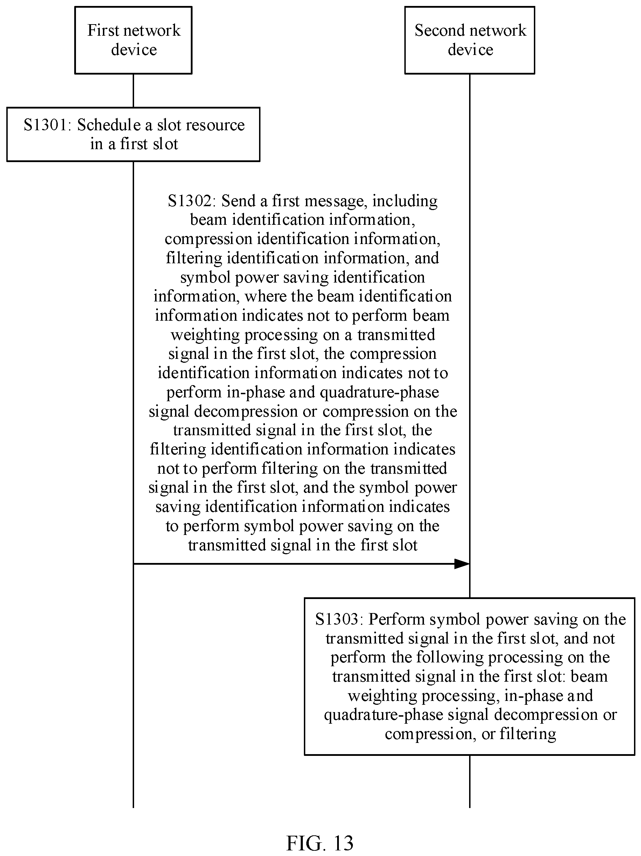

For example, the first message further includes compression identification information, filtering identification information, and symbol power saving identification information, the beam identification information indicates not to perform beam weighting processing on the transmitted signal in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot. FIG. 13 is still another schematic flowchart of a communication method according to an embodiment of this application. As shown in FIG. 13, the communication method may include S1301 to S1303.

S1301: A first network device schedules a slot resource in a first slot.

For S1301, refer to the foregoing descriptions of S401, S701, S702, and the like. Details are not described herein again.

S1302: The first network device sends a first message to a second network device, where the first message includes beam identification information, compression identification information, filtering identification information, and symbol power saving identification information, the beam identification information indicates not to perform beam weighting processing on a transmitted signal in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

Correspondingly, the second network device receives the first message.

S1303: The second network device performs symbol power saving on the transmitted signal in the first slot, and does not perform the following processing on the transmitted signal in the first slot: beam weighting processing, in-phase and quadrature-phase signal decompression or compression, or filtering.

For example, when the first slot is a downlink slot, the compression identification information may indicate not to perform in-phase and quadrature-phase signal decompression on the transmitted signal in the first slot; or when the first slot is an uplink slot, the compression identification information may indicate not to perform in-phase and quadrature-phase signal compression on the transmitted signal in the first slot.

The in-phase and quadrature-phase signal is an IQ signal described in the foregoing embodiments. When the first network device does not compress the IQ signal, the compression identification information may indicate not to perform IQ signal decompression on the transmitted signal in the first slot. That the second network device does not perform IQ signal decompression or compression on the transmitted signal in the first slot may include: The second network device disables, in the first slot, a digital signal processor (digital signal processor, DSP) configured to implement an IQ signal decompression or compression function, or does not perform a step of performing IQ signal decompression or compression via a digital signal processor. Optionally, the digital signal processor configured to implement the IQ signal decompression or compression function may be a dedicated processor for implementing IQ signal decompression or compression processing. The processor may also be a field programmable gate array (field programmable gate array, FPGA) or another chip.

That the second network device does not perform filtering on the transmitted signal in the first slot may include: disabling a filter at a radio frequency front end, not performing a filtering function in an intermediate frequency processor, or the like in the first slot.

That the second network device performs symbol power saving on the transmitted signal in the first slot may include: disabling a power amplification device of a radio frequency module in a symbol period of the first slot. That the power amplification device is disabled in the symbol period of the first slot may be that the power amplification device is disabled in the symbol period for a control signal, a data channel, and the like in the first slot.

When the first slot is an uplink slot, the disabled power amplification device may be an uplink low noise power amplifier (low noise amplifier, LNA); or when the first slot is a downlink slot, the disabled power amplification device may be a downlink PA.

Optionally, a power saving manner of the power amplification device may be symbol-level power saving or slot-level power saving. Symbol-level power saving means that the second network device may perform symbol power saving in a unit of an OFDM symbol. Slot-level power saving means that the second network device may perform symbol power saving in a unit of a slot. This is not limited herein.

The foregoing describes a case in which the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot. It may be understood that, when the compression identification information, the filtering identification information, and the symbol power saving identification information indicate other cases, an implementation is similar to this. Details are not described herein again.

In this design, when the second network device does not perform, in-phase and quadrature-phase signal decompression or compression on the transmitted signal in the first slot based on the indication of the compression identification information, or does not perform filtering on the transmitted signal in the first slot based on the indication of the filtering identification information, or performs symbol power saving on the transmitted signal in the first slot based on the indication of the symbol power saving identification information, energy consumption of the second network device can be further reduced. In addition, the first message indicates whether the second network device performs symbol power saving on the transmitted signal in the first slot, and the second network device does not need to determine, in a symbol energy detection manner, whether to perform symbol power saving on the transmitted signal in the first slot. For example, an intermediate frequency chip of the second network device may no longer need to perform symbol energy detection, and the second network device only needs to perform symbol power saving based on the indication of the compression identification information.

In a possible design, the first network device may also determine, based on the scheduling result in the first slot, that the compression identification information indicates whether to perform in-phase and quadrature-phase signal decompression or compression on the transmitted signal in the first slot, that the filtering identification information indicates whether to perform filtering on the transmitted signal in the first slot, and that the symbol power saving identification information indicates whether to perform symbol power saving on the transmitted signal in the first slot.

For example, when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

When scheduling is performed in the first slot, the compression identification information indicates to perform in-phase and quadrature-phase signal decompression or compression on the transmitted signal in the first slot, the filtering identification information indicates to perform filtering on the transmitted signal in the first slot, and the symbol power saving identification information indicates not to perform symbol power saving on the transmitted signal in the first slot.

For a manner of determining whether scheduling is performed in the first slot, refer to the description in the foregoing embodiment. For example, whether scheduling is performed in the first slot is determined based on the scheduling information or the scheduling type information. Details are not described herein again.

In this design, the first network device determines, based on the scheduling result in the first slot, that the compression identification information indicates whether to perform in-phase and quadrature-phase signal decompression or compression on the transmitted signal in the first slot, that the filtering identification information indicates whether to perform filtering on the transmitted signal in the first slot, and that the symbol power saving identification information indicates whether to perform symbol power saving on the transmitted signal in the first slot. In a scenario in which no scheduling is performed in an uplink slot or a downlink slot, that is, no service data needs to be transmitted, this can indicate the second network device to perform symbol power saving on the transmitted signal in the first slot, and not to perform the following processing on the transmitted signal in the first slot: beam weighting processing, in-phase and quadrature-phase signal decompression or compression, or filtering. In this way, in a scenario in which no service data needs to be transmitted, no in-phase and quadrature-phase signal decompression or compression is performed on the transmitted signal in the first slot, no filtering is performed on the transmitted signal in the first slot, and symbol power saving is performed on the transmitted signal in the first slot, to further reduce energy consumption, so that energy consumption of the network device is reduced without affecting service data transmission quality.

Optionally, for an implementation of the identification information, for example, the compression identification information, the filtering identification information, and the symbol power saving identification information, refer to the implementation of the beam identification information in the foregoing embodiment. This is not limited herein.

In some other embodiments, when scheduling is performed in the first slot (for details, refer to the foregoing description), the first network device may also indicate the second network device to process the transmitted signal in the first slot in at least one of the following manners: not performing beam weighting, not performing in-phase and quadrature-phase signal decompression or compression on the transmitted signal in the first slot, not performing filtering on the transmitted signal in the first slot, and performing symbol power saving on the transmitted signal in the first slot. In this way, device energy consumption can be reduced in a scenario in which scheduling is performed in the first slot. This is not limited in this application. For the indication manner, refer to the indication information in the foregoing embodiment. Details are not described again. Optionally, in some other possible designs, the first message may indicate the second network device to disable more radio frequency module components, to obtain more energy saving benefits. For an indication manner, refer to the foregoing embodiments of this application. This is not limited in this application either.

The foregoing mainly describes the solutions provided in embodiments of this application from a perspective of interaction between network elements. It may be understood that, to implement the foregoing functions, the network elements such as the first network device and the second network device include corresponding hardware structures and/or software modules for performing the functions.

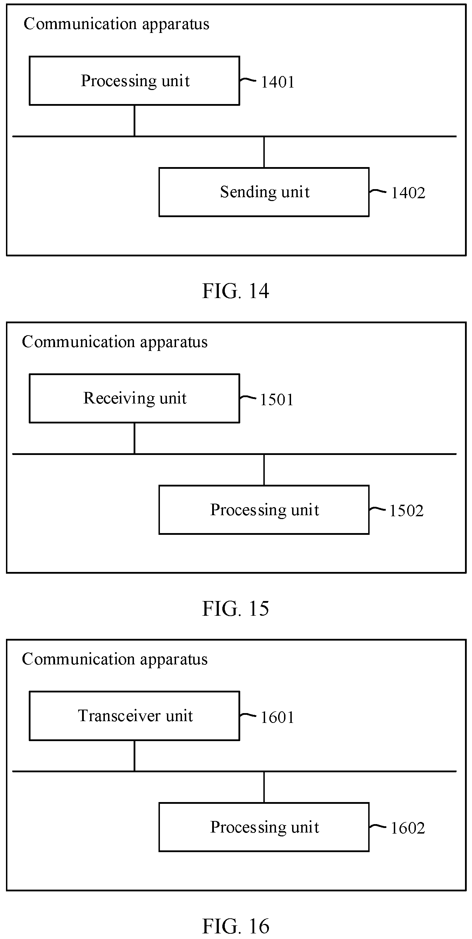

For example, an embodiment of this application may further provide a communication apparatus that may be applied to the foregoing first network device. FIG. 14 is a diagram of a structure of a communication apparatus according to an embodiment of this application.

As shown in FIG. 14, the communication apparatus may include a processing unit 1401 and a sending unit 1402.

The processing unit 1401 is configured to schedule a slot resource in a first slot, where the slot resource in the first slot is used to transmit a signal between a network device and a terminal device. The sending unit 1402 is configured to send a first message, where the first message includes beam identification information, and the beam identification information indicates whether to perform beam weighting processing on the transmitted signal in the first slot.

In a possible design, the processing unit 1401 is further configured to obtain scheduling information, where the scheduling information indicates whether scheduling is performed in the first slot. When the scheduling information indicates that no scheduling is performed in the first slot, the beam identification information indicates not to perform beam weighting processing on the transmitted signal in the first slot.

In a possible design, the first message further includes scheduling type information; and the scheduling type information indicates whether scheduling is performed in the first slot. When the scheduling information indicates that no scheduling is performed in the first slot, the scheduling type information indicates that no scheduling is performed in the first slot. When the scheduling type information indicates that no scheduling is performed in the first slot, the beam identification information indicates not to perform beam weighting processing on the transmitted signal in the first slot.

In a possible design, the first message includes a control plane message, the control plane message includes resource information, the resource information indicates the slot resource in the first slot, and the control plane message indicates that scheduling of the slot resource in the first slot is completed.

In a possible design, the first message further includes at least one of the following identification information: compression identification information, filtering identification information, and symbol power saving identification information. The compression identification information indicates whether to perform in-phase and quadrature-phase signal decompression or compression on the transmitted signal in the first slot; the filtering identification information indicates whether to perform filtering on the transmitted signal in the first slot; and the symbol power saving identification information indicates whether to perform symbol power saving on the transmitted signal in the first slot.

In a possible design, when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

In a possible design, the first slot includes an uplink slot and/or a downlink slot.

Optionally, the communication apparatus shown in FIG. 14 may further include a receiving unit (not shown in the figure), configured to implement a receiving function, for example, receive information (for example, uplink data) from a second network device or another network device. For another example, an embodiment of this application may further provide a communication apparatus that may be applied to the foregoing second network device. FIG. 15 is a diagram of another structure of a communication apparatus according to an embodiment of this application. As shown in FIG. 15, the communication apparatus may include a receiving unit 1501 and a processing unit 1502.

The receiving unit 1501 is configured to receive a first message, where the first message includes beam identification information, and the beam identification information indicates whether to perform beam weighting processing on a transmitted signal in a first slot. The processing unit 1502 is configured to: when the beam identification information indicates no, skip performing beam weighting processing on the transmitted signal in the first slot.

In a possible design, the first message further includes scheduling type information; and the scheduling type information indicates whether scheduling is performed in the first slot. When the scheduling type information indicates that no scheduling is performed in the first slot, the beam identification information indicates not to perform beam weighting processing on the transmitted signal in the first slot.

In a possible design, the first message includes a control plane message, the control plane message includes resource information, the resource information indicates the slot resource in the first slot, and the control plane message indicates that scheduling of the slot resource in the first slot is completed.

In a possible design, the first message further includes at least one of the following identification information: compression identification information, filtering identification information, and symbol power saving identification information. The compression identification information indicates whether to perform in-phase and quadrature-phase signal decompression or compression on the transmitted signal in the first slot; the filtering identification information indicates whether to perform filtering on the transmitted signal in the first slot; and the symbol power saving identification information indicates whether to perform symbol power saving on the transmitted signal in the first slot.

The processing unit 1502 is further configured to: for at least one target identification information in the compression identification information, the filtering identification information, and the symbol power saving identification information, process the transmitted signal in the first slot based on an indication of the target identification information.

In a possible design, when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

In a possible design, the first slot includes an uplink slot and/or a downlink slot.

Optionally, the communication apparatus shown in FIG. 15 may further include a sending unit (not shown in the figure), configured to implement a sending function, for example, send information (for example, uplink data) to a first network device or another network device.

It should be understood that division of the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated, or may be implemented independently. The processing element herein may also be referred to as a processor, and may be an integrated circuit with a signal processing capability. In an implementation, steps in the foregoing methods or the foregoing units may be implemented by using a hardware integrated logic circuit in a processor element, or may be implemented in the form of software invoked by the processing element.

In an example, any one of the foregoing units in the apparatus may be one or more integrated circuits configured to implement the foregoing methods, for example, one or more ASICs, one or more DSPs, one or more FPGAs, or a combination of at least two of the integrated circuit forms. For another example, when a unit in the apparatus may be implemented in a manner in which a processing element schedules a program, the processing element may be a general-purpose processor, such as a CPU or another processor that can invoke a program. For still another example, the units may be integrated and implemented in a form of a system-on-a-chip (system-on-a-chip, SOC).

The foregoing unit used for receiving is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus, and the apparatus may be applied to the first network device or the second network device. The communication apparatus may include a processor and an interface circuit. There may be one or more processors.

When the communication apparatus is used in the first network device, the processor is configured to: communicate with another apparatus via the interface circuit, and perform the steps performed by the first network device in the foregoing methods.

When the communication apparatus is used in the second network device, the processor is configured to: communicate with another apparatus via the interface circuit, and perform the steps performed by the second network device in the foregoing methods.

In an implementation, the units used by the first network device or the second network device to respectively implement the corresponding steps in the foregoing method may be implemented by a processing element by scheduling a program. For example, the apparatus used for the first network device or the second network device may include a processing element and a storage element. The processing element invokes a program stored in the storage element, to perform the method performed by the first network device or the second network device in the foregoing method embodiments. The storage element may be a storage element located on a same chip as the processing element, that is, an on-chip storage element.

In another implementation, the program used to perform the method performed by the first network device or the second network device in the foregoing method may be in a storage element located on a different chip from the processing element, that is, an off-chip storage element. In this case, the processing element invokes the program from the off-chip storage element or loads the program into an on-chip storage element, to invoke and execute the method performed by the first network device or the second network device in the foregoing method embodiments.

For example, an embodiment of this application may further provide a communication apparatus. The communication apparatus may include a processor, configured to execute computer instructions stored in a memory. When the computer instructions are executed, the apparatus is enabled to perform the method performed by the first network device or the second network device. The memory may be located inside or outside the communication apparatus. In addition, there are one or more processors.

In still another implementation, the units used by the first network device or the second network device to implement the steps in the foregoing methods may be configured as one or more processing elements. These processing elements may be correspondingly disposed on the first network device or the second network device. The processing element herein may be an integrated circuit, for example, one or more ASICs, one or more DSPs, one or more FPGAs, or a combination of these integrated circuits. These integrated circuits may be integrated together to form a chip. The units used by the first network device or the second network device to implement the steps in the foregoing method may be integrated together, and implemented in a form of an SOC. The SOC chip is configured to implement the corresponding method. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of some units may be implemented by invoking a program by the processing element, and functions of some units may be implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

For example, an embodiment of this application further provides a chip system. The chip system may be applied to the first network device or the second network device. The chip system includes one or more interface circuits and one or more processors. The interface circuit and the processor are interconnected through a line. The processor receives computer instructions from a memory of an electronic device via the interface circuit and executes the computer instructions, to implement the method performed by the corresponding first network device or the corresponding second network device in the foregoing method embodiments. For the first network device or the second network device, the electronic device may be the network device or a device in the network device, or may be another device communicating with the network device.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the method in embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, including computer software instructions. When the computer software instructions are run on a first network device or is built in a chip of a first network device, the first network device may be enabled to perform the method performed by the first network device in the foregoing embodiments.

Alternatively, when the computer software instructions are run on a second network device or a chip built in a second network device, the second network device is enabled to perform the method performed by the second network device in the foregoing embodiments.

Optionally, an embodiment of this application further provides a communication apparatus. FIG. 16 is still another diagram of a structure of a communication apparatus according to an embodiment of this application. As shown in FIG. 16, the communication apparatus may include a transceiver unit 1601 and a processing unit 1602. The transceiver unit 1601 may be configured to send and receive information, or configured to communicate with another network element. The processing unit 1602 may be configured to process data. For example, the apparatus may implement, via the transceiver unit 1601 and the processing unit 1602, the method performed by the first network device or the second network device.

Optionally, an embodiment of this application further provides a computer program product. When the computer program product is executed, the method performed by the first network device or the second network device may be implemented.

Based on the foregoing embodiments, an embodiment of this application further provides a communication system, including a first network device and a second network device. The first network device performs the method performed by the first network device in the foregoing embodiments. The second network device performs the method performed by the second network device in the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
scheduling a slot resource in a first slot, wherein the slot resource in the first slot is used to transmit a signal between a network device and a terminal device; and
sending a first message, wherein the first message comprises beam identification information, and the beam identification information indicates whether to perform beam weighting processing on the transmitted signal in the first slot.

2. The method according to claim 1, wherein the method further comprises:
obtaining scheduling information, wherein the scheduling information indicates whether scheduling is performed in the first slot; and
when the scheduling information indicates that no scheduling is performed in the first slot, the beam identification information indicates not to perform beam weighting processing on the transmitted signal in the first slot.

3. The method according to claim 2, wherein the first message further comprises scheduling type information;
the scheduling type information indicates whether scheduling is performed in the first slot; when the scheduling information indicates that no scheduling is performed in the first slot, the scheduling type information indicates that no scheduling is performed in the first slot; and
when the scheduling type information indicates that no scheduling is performed in the first slot, the beam identification information indicates not to perform beam weighting processing on the transmitted signal in the first slot.

4. The method according to any one of claims 1 to 3, wherein the first message comprises a control plane message, the control plane message comprises resource information, the resource information indicates the slot resource in the first slot, and the control plane message indicates that scheduling of the slot resource in the first slot is completed.

5. The method according to any one of claims 1 to 4, wherein the first message further comprises at least one of the following identification information: compression identification information, filtering identification information, and symbol power saving identification information;
the compression identification information indicates whether to perform in-phase and quadrature-phase signal decompression or compression on the transmitted signal in the first slot;
the filtering identification information indicates whether to perform filtering on the transmitted signal in the first slot; and
the symbol power saving identification information indicates whether to perform symbol power saving on the transmitted signal in the first slot.

6. The method according to claim 5, wherein when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

7. The method according to any one of claims 1 to 6, wherein the first slot comprises an uplink slot and/or a downlink slot.

8. A communication method, wherein the method comprises:
receiving a first message, wherein the first message comprises beam identification information, and the beam identification information indicates whether to perform beam weighting processing on a transmitted signal in a first slot; and
when the beam identification information indicates no, skipping performing beam weighting processing on the transmitted signal in the first slot.

9. The method according to claim 8, wherein the first message further comprises scheduling type information;
the scheduling type information indicates whether scheduling is performed in the first slot; and
when the scheduling type information indicates that no scheduling is performed in the first slot, the beam identification information indicates not to perform beam weighting processing on the transmitted signal in the first slot.

10. The method according to claim 8 or 9, wherein the first message comprises a control plane message, the control plane message comprises resource information, the resource information indicates a slot resource in the first slot, and the control plane message indicates that scheduling of the slot resource in the first slot is completed.

11. The method according to any one of claims 8 to 10, wherein the first message further comprises at least one of the following identification information: compression identification information, filtering identification information, and symbol power saving identification information;
the compression identification information indicates whether to perform in-phase and quadrature-phase signal decompression or compression on the transmitted signal in the first slot;
the filtering identification information indicates whether to perform filtering on the transmitted signal in the first slot; and
the symbol power saving identification information indicates whether to perform symbol power saving on the transmitted signal in the first slot; and
the method further comprises:
for at least one target identification information in the compression identification information, the filtering identification information, and the symbol power saving identification information, processing the transmitted signal in the first slot based on an indication of the target identification information.

12. The method according to claim 11, wherein when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

13. The method according to any one of claims 8 to 12, wherein the first slot comprises an uplink slot and/or a downlink slot.

14. A communication apparatus, wherein the apparatus comprises:
a processing unit, configured to schedule a slot resource in a first slot, wherein the slot resource in the first slot is used to transmit a signal between a network device and a terminal device; and
a sending unit, configured to send a first message, wherein the first message comprises beam identification information, and the beam identification information indicates whether to perform beam weighting processing on the transmitted signal in the first slot.

15. The apparatus according to claim 14, wherein the processing unit is further configured to obtain scheduling information, wherein the scheduling information indicates whether scheduling is performed in the first slot; and
when the scheduling information indicates that no scheduling is performed in the first slot, the beam identification information indicates not to perform beam weighting processing on the transmitted signal in the first slot.

16. The apparatus according to claim 15, wherein the first message further comprises scheduling type information;
the scheduling type information indicates whether scheduling is performed in the first slot;
when the scheduling information indicates that no scheduling is performed in the first slot, the scheduling type information indicates that no scheduling is performed in the first slot; and
when the scheduling type information indicates that no scheduling is performed in the first slot, the beam identification information indicates not to perform beam weighting processing on the transmitted signal in the first slot.

17. The apparatus according to any one of claims 14 to 16, wherein the first message comprises a control plane message, the control plane message comprises resource information, the resource information indicates the slot resource in the first slot, and the control plane message indicates that scheduling of the slot resource in the first slot is completed.

18. The apparatus according to any one of claims 14 to 17, wherein the first message further comprises at least one of the following identification information: compression identification information, filtering identification information, and symbol power saving identification information;
the compression identification information indicates whether to perform in-phase and quadrature-phase signal decompression or compression on the transmitted signal in the first slot;
the filtering identification information indicates whether to perform filtering on the transmitted signal in the first slot; and
the symbol power saving identification information indicates whether to perform symbol power saving on the transmitted signal in the first slot.

19. The apparatus according to claim 18, wherein when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

20. The apparatus according to any one of claims 14 to 19, wherein the first slot comprises an uplink slot and/or a downlink slot.

21. A communication apparatus, wherein the apparatus comprises:
a receiving unit, configured to receive a first message, wherein the first message comprises beam identification information, and the beam identification information indicates whether to perform beam weighting processing on a transmitted signal in the first slot; and
a processing unit, configured to: when the beam identification information indicates no, skip performing beam weighting processing on the transmitted signal in the first slot.

22. The apparatus according to claim 21, wherein the first message further comprises scheduling type information;
the scheduling type information indicates whether scheduling is performed in the first slot; and
when the scheduling type information indicates that no scheduling is performed in the first slot, the beam identification information indicates not to perform beam weighting processing on the transmitted signal in the first slot.

23. The apparatus according to claim 21 or 22, wherein the first message comprises a control plane message, the control plane message comprises resource information, the resource information indicates a slot resource in the first slot, and the control plane message indicates that scheduling of the slot resource in the first slot is completed.

24. The apparatus according to any one of claims 21 to 23, wherein the first message further comprises at least one of the following identification information: compression identification information, filtering identification information, and symbol power saving identification information;
the compression identification information indicates whether to perform in-phase and quadrature-phase signal decompression or compression on the transmitted signal in the first slot;
the filtering identification information indicates whether to perform filtering on the transmitted signal in the first slot; and
the symbol power saving identification information indicates whether to perform symbol power saving on the transmitted signal in the first slot; and
the processing unit is further configured to: for at least one target identification information in the compression identification information, the filtering identification information, and the symbol power saving identification information, process the transmitted signal in the first slot based on an indication of the target identification information.

25. The apparatus according to claim 24, wherein when no scheduling is performed in the first slot, the compression identification information indicates not to perform in-phase and quadrature-phase signal decompression or compression on the transmitted signal in the first slot, the filtering identification information indicates not to perform filtering on the transmitted signal in the first slot, and the symbol power saving identification information indicates to perform symbol power saving on the transmitted signal in the first slot.

26. The apparatus according to any one of claims 21 to 25, wherein the first slot comprises an uplink slot and/or a downlink slot.

27. A computer-readable storage medium, comprising computer software instructions, wherein
when the computer software instructions are run in a network device or a chip built in a network device, the network device is enabled to perform the method according to any one of claims 1 to 7 or the method according to any one of claims 8 to 13.

28. A chip system, wherein the chip system is applied to a network device, and the chip system comprises one or more interface circuits and one or more processors; and
the interface circuit and the processor are interconnected through a cable; and
the processor receives computer instructions from a memory of an electronic device via the interface circuit, and executes the computer instructions, to implement the method according to any one of claims 1 to 7 or the method according to any one of claims 8 to 13.

29. A communication system, comprising a first network device and a second network device, wherein
the first network device performs the method according to any one of claims 1 to 7; and
the second network device performs the method according to any one of claims 8 to 13.
